# EUROPÄISCHE PATENTSCHRIFT

(11) **EP 2 866 387 B1**
(45) Veröffentlichungstag und Bekanntmachung des Hinweises auf die Patenterteilung: **30.11.2016**
(21) Anmeldenummer: 13190211.6
(22) Anmeldetag: 25.10.2013
(51) Int. Cl.: H04L 12/423, H04L 12/437, G08B 25/04, G08B 29/06, G08B 17/00, A62C 37/00

(54) **Bussystem und Verfahren zum Betreiben eines solchen Bussystems**
Bus system and method for operating such a bus system
Système de bus et procédé de fonctionnement d'un tel système de bus

(43) Veröffentlichungstag der Anmeldung: 29.04.2015
(73) Patentinhaber: Amrona AG, 6304 Zug (CH)
(72) Erfinder: Lewonig, Horst, 30655 Hannover (DE)
(74) Vertreter: Rupprecht, Kay

(56) Entgegenhaltungen:
- EP-A1- 2 023 543
- EP-A1- 2 282 452
- EP-A2- 1 978 687
- WO-A1-91/17609
- US-A1- 2004 008 720

## Beschreibung

Die vorliegende Erfindung betrifft ein Bussystem, insbesondere zur Überwachung und/oder Steuerung von Komponenten einer Brandmelde-, Brandbekämpfungs- und/oder Sauerstoffreduzierungsanlage. Die Erfindung betrifft ferner ein Verfahren zum Betreiben eines solchen Bussystems.

Aufgabe einer Brandmeldeanlage ist es, einen Brand zum frühestmöglichen Zeitpunkt festzustellen und Signale und Meldungen auszulösen, damit geeignete Maßnahmen eingeleitet werden können. Wesentlich hierbei ist, dass die Brandmeldeanlage zuverlässig funktioniert, um sicherzustellen, dass im Brandfall rechtzeitig eine entsprechende Signalisierung erfolgen kann.

Häufig ist eine Brandmeldeanlage nicht nur ausgelegt, eine Brandgefahr zu melden, sondern auch diese zu erkennen und gegebenenfalls sogar geeignete Maßnahmen zu ergreifen. Insofern besteht eine Brandmeldeanlage in der Regel aus einer Anzahl von miteinander verknüpften Bestandteilen, wie automatischen Brandmeldern, Handfeuermeldern, akustischen oder optischen Signalgebern, oder Komponenten einer Löschanlage. Diese Bestandteile sind über einen oder mehrere Übertragungsweg(e) mit einer Brandmeldezentrale verbunden.

Hierzu ist es im Bereich des Brandschutzes bekannt, ein Ringbussystem für die Anbindung der Komponenten der Brandmeldeanlage an die Brandmeldezentrale bzw. Steuerungseinrichtung zu verwenden. Der Vorteil eines Ringbussystems ist darin zu sehen, dass auch im Falle eines Kurzschlusses oder einer Leitungsunterbrechung alle angebundenen Busteilnehmer nach wie vor von der Steuerungseinrichtung ansprechbar sind.

In diesem Zusammenhang wird beispielsweise auf die Druckschrift EP 1 363 261 A1 verwiesen, in welcher ein Ringbussystem einer Gefahrenmeldeanlage offenbart ist.

Das Dokument EP 2 282 452 offenbart ein Bussystem mit einer Steuereinheit, die zwei Daten-Kommunikationsschnittstellen aufweist. Die Daten-Kommunikationsschnittstellen sind jeweils zum Senden und Empfangen von Daten mehrerer Busteilnehmer ausgelegt. Die Busteilnehmer weisen einen Buskoppler mit ebenfalls zwei Daten-Kommunikationsschnittstellen auf, die jeweils zum Senden und Empfangen von Daten ausgelegt sind. Der Buskoppler der Busteilnehmer ist dazu ausgebildet, Daten, die auf einer der Daten-Kommunikationsschnittstellen empfangen werden, direkt über die andere Daten-Kommunikationsschnittstelle zu senden und somit weiterzuleiten.

Die aus dem Stand der Technik im Bereich des Brandschutzes bekannten Ringbussysteme weisen im praktischen Gebrauch allerdings Nachteile auf, die sich aus der eingeschränkten Bandbreite der Bussysteme ergeben. Die eingeschränkte Bandbreite führt dazu, dass typische Abfragezeiten, wie beispielsweise eine Statusabfrage (Alarm- bzw. Störungszustand), aller an dem Ringbussystem angeschlossenen Komponenten mehrere Sekunden betragen. Typische Zeiten für eine Wiederinbetriebnahme des Ringbussystems nach einem Leitungsfehler liegen im Bereich einer bis fünf Minuten.

Obwohl diese Reaktionszeiten nach der Norm EN 54-13 (Stand: August 2005) durchaus für einen Einsatz in einer Brandmeldeanlage ausreichend sind, eignen sich die Reaktionszeiten nicht dazu, Analogwerte von an dem Bussystem angeschlossenen Sensoren, beispielsweise Gassensoren einer Sauerstoffreduzierungsanlage, mit einer ausreichenden Auflösung und Abtastung zu erfassen. Auch erfüllen die Reaktionszeiten der aus dem Stand der Technik bekannten Ringbussysteme nicht die Zeitforderungen einer elektrischen Verzögerungs- und Steuereinrichtung (EST) für Feuerlöschanlagen, zum Beispiel nach EN 12094-1 bzw. VdS 2496.

Auf Grundlage dieser Probleme liegt der vorliegenden Erfindung die Aufgabe zugrunde, ein Bussystem der vorstehend beschriebenen und aus dem Stand der Technik bekannten Art dahingehend weiterzubilden, dass die Reaktionszeit des Bussystems verbessert werden kann, während gleichzeitig sichergestellt ist, dass auch bei einer Leitungsunterbrechung alle Busteilnehmer nach wie vor erreichbar sind. Des Weiteren soll ein entsprechendes Verfahren zum Betreiben eines solchen Bussystems angegeben werden.

Im Hinblick auf das Bussystem wird diese Aufgabe durch den Gegenstand des unabhängigen Patentanspruches 1 und im Hinblick auf das Verfahren durch den Gegenstand des nebengeordneten Patentanspruches 7 gelöst. Vorteilhafte Weiterbildungen der erfindungsgemäßen Lösung sind in den abhängigen Ansprüchen angegeben.

Demgemäß wird insbesondere ein Bussystem vorgeschlagen, welches eine Steuereinheit (engl.: loop controller) sowie mindestens ein und vorzugsweise eine Vielzahl von Peripheriegeräte aufweist, die in dem Bussystem als Busteilnehmer angeschlossen sind. Bei diesen Peripheriegeräten (Busteilnehmern) handelt es sich um Komponenten einer Brandmeldeanlage. Hierunter fallen insbesondere Brandmelder, Alarmierungsmittel (zum Beispiel nach einer Norm der Reihe EN 54), Ventile für die Auslösung einer Feuerlöschanlage, Komponenten zur Positionsrückmeldung von Löschanlagenkomponenten (zum Beispiel nach einer Norm der Reihe EN 12094), aber auch beispielsweise Sensoren, insbesondere Gassensoren einer Sauerstoffreduzierungsanlage, wie beispielsweise Sauerstoffsensoren.

Die vorzugsweise mit einer Brandmeldezentrale verbundene Steuereinheit des erfindungsgemäßen Bussystems weist mindestens zwei unabhängig voneinander ausgeführte Daten-Kommunikationsschnittstellen (nachfolgend auch als "Ports" bezeichnet) auf, wobei diese mindestens zwei Daten-Kommunikationsschnittstellen jeweils zum Senden und Empfangen von Daten ausgelegt sind.

Jedes Peripheriegerät (Busteilnehmer) weist einen sogenannten Buskoppler auf, über den das Peripheriegerät (Busteilnehmer) an das Bussystem angeschlossen ist. Hierzu weist jeder Buskoppler mindestens zwei unabhängig voneinander ausgeführte Daten-Kommunikationsschnittstellen (Ports) auf, die - wie auch die Daten-Kommunikationsschnittstellen der Steuereinheit - ebenfalls jeweils zum Senden und Empfangen ausgelegt sind.

Bei dem erfindungsgemäßen Bussystem sind die Steuereinheit und die an dem Bussystem angeschlossenen Buskoppler der einzelnen Peripheriegeräte jeweils über ihre Daten-Kommunikationsschnittstellen und entsprechende Zweipunktverbindungen unter Ausbildung einer Ring-Topologie miteinander verbunden. Bei den einzelnen Zweipunktverbindungen handelt es sich um unabhängige Bussegmente, die zumindest bereichsweise als drahtgebundene und/oder optische Datenübertragungskanäle ausgebildet sein können.

Unter dem hierin verwendeten Begriff "Ring-Topologie" ist eine Vernetzung bzw. Verbindungsstruktur zu verstehen, bei welcher jeweils zwei Teilnehmer über Zweipunktverbindungen miteinander verbunden sind, so dass ein geschlossener Ring entsteht. Die beispielsweise von der Steuereinheit zu übertragenden Daten (Information) wird in der Ring-Topologie von Teilnehmer zu Teilnehmer weitergeleitet, bis sie ihren Bestimmungsort erreichen. Jeder Busteilnehmer kann dabei gleichzeitig als sogenannter "Repeater" wirken, so dass auf diese Weise große Entfernungen überbrückt werden können.

Bei der erfindungsgemäßen Lösung ist vorgesehen, dass jeder Buskoppler eines jeden Busteilnehmers (Peripheriegeräts) derart ausgebildet ist, dass er Daten, die von der Steuereinheit gesendet und auf einer seiner mindestens zwei Daten-Kommunikationsschnittstellen empfangen werden, direkt und ohne Verzögerung über eine andere seiner mindestens zwei Daten-Kommunikationsschnittstellen sendet und somit weiterleitet. Mit anderen Worten, jeder Busteilnehmer leitet die empfangenen Daten ohne Verzögerung an die anderen Busteilnehmer weiter.

Bei der erfindungsgemäßen Lösung ist vorgesehen, dass der Buskoppler eines jeden Busteilnehmers (Peripheriegeräts) derart ausgebildet ist, dass er - in Reaktion auf zuvor von der Steuereinheit empfangene busteilnehmeradressierte Daten oder Befehle - grundsätzlich über seine mindestens zwei Daten-Kommunikationsschnittstellen und in entgegengesetzte Richtungen der Ring-Topologie Daten an die Steuereinheit sendet. Mit anderen Worten, wenn die Steuereinheit des Bussystems Daten, insbesondere Daten mit Rückmelde-/Antwort-Aufforderung, an einen bestimmten Bussteilnehmer sendet, wird die Rückmeldung bzw. Antwort dieses Busteilnehmers in beide Richtungen der Ring-Topologie an die Steuereinheit gesendet.

Die mit der erfindungsgemäßen Lösung erzielbaren Vorteile sind insbesondere darin zu sehen, dass - im Vergleich zu aus dem Stand der Technik bekannten Lösungen - die mit dem Bussystem erzielbaren Reaktionszeiten sowohl beim laufenden Betrieb als auch bei einer Wiedereinschaltung des Systems verbessert werden. Gleichzeitig ist sichergestellt, dass auch bei einer Leitungsunterbrechung alle Busteilnehmer nach wie vor von der Steuereinheit erreichbar sind.

Zu diesem Zweck ist gemäß einem Aspekt der vorliegenden Erfindung vorgesehen, dass der Buskoppler eines jeden Busteilnehmers eine Sende-/Empfangsumschalteinheit aufweist, die ausgelegt ist, den Beginn eines Datenempfangs auf mindestens einer der mindestens zwei Daten-Kommunikationsschnittstellen des Buskopplers vorzugsweise automatisch zu erkennen und beim Erkennen des Beginns eines Datenempfangs auf einer der mindestens zwei Daten-Kommunikationsschnittstellen des Buskopplers vorzugsweise automatisch eine Empfangsleitung der entsprechenden Daten-Kommunikationsschnittstelle mit einer Sendeleitung der anderen Daten-Kommunikationsschnittstelle zu verbinden.

Auf diese Weise ist eine verzögerungsfreie Datenweiterleitung sichergestellt und eine reaktionsschnelle Kommunikation zwischen der Steuereinheit und den Peripheriegeräten gewährleistet.

In einer bevorzugten Realisierung der zuletzt genannten Weiterbildungen des erfindungsgemäßen Bussystems ist vorgesehen, dass die Sende-/Empfangsumschalteinheit vorzugsweise einen Logikbaustein und/oder einen Mikrocontroller aufweist.

Gemäß einem weiteren Aspekt der Erfindung ist die bereits genannte Sende-/Empfangsumschalteinheit des Buskopplers bzw. der Steuereinheit ausgelegt, vorzugsweise automatisch das Ende eines Datenempfangs auf mindestens einer der mindestens zwei Daten-Kommunikationsschnittstellen vorzugsweise automatisch zu erkennen und beim Erkennen des Endes des Datenempfangs die Verbindung der Empfangsleitung der entsprechenden Daten-Kommunikationsschnittstelle mit der Sendeleitung der entsprechend anderen Daten-Kommunikationsschnittstelle aufzutrennen.

Um nicht nur eine verzögerungsfreie Datenweiterleitung gewährleisten zu können, sondern auch eine direkte Kommunikation mit einem der Busteilnehmer des Bussystems, ist gemäß einem weiteren Aspekt der vorliegenden Erfindung vorgesehen, dass der mindestens eine Busteilnehmer eine Verarbeitungseinheit außerhalb des Buskopplers aufweist, die durch einen Logikbaustein und/oder einen Mikrokontroller gebildet wird. Ferner ist die Sende-/Empfangsumschalteinheit des Buskopplers derart ausgebildet, dass beim Erkennen des Beginns eines Datenempfangs auf einer der mindestens zwei Daten-Kommunikationsschnittstellen des Buskopplers vorzugsweise automatisch die Empfangsleitung dieser Daten-Kommunikationsschnittstelle mit einer Empfangsleitung der Verarbeitungseinheit verbunden wird.

Um die eingangs beschriebene Daten-Kommunikation über das erfindungsgemäße Bussystem zu ermöglichen, ist nach einer Weiterbildung der zuvor beschriebenen Ausführungsformen die Verarbeitungseinheit des Buskopplers ausgebildet, die Sende-/Empfangsumschalteinheit des Buskopplers so anzusteuern, dass die Sendeleitung der Verarbeitungseinheit mit der Sendeleitung einer ersten und/oder zweiten Daten-Kommunikationsschnittstelle des Buskopplers verbunden wird.

Gemäß einem weiteren Aspekt der Erfindung ist die Verarbeitungseinheit des Busteilnehmers ausgebildet, die Sende-/Empfangsumschalteinheit des Buskopplers so anzusteuern, dass die automatische Verbindung der Empfangsleitung einer der mindestens zwei Daten-Kommunikationsschnittstellen des Buskopplers mit der Sendeleitung einer anderen der mindestens zwei Daten-Kommunikationsschnittstellen des Buskopplers unterbunden wird.

Gemäß der Erfindung sendet die Steuereinheit des Bussystems über nur eine der mindestens zwei Daten-Kommunikationsschnittstellen Daten an die entsprechenden Busteilnehmer, insbesondere busteilnehmeradressierte Daten oder Befehle. Jeder Busteilnehmer hingegen sendet grundsätzlich über seine mindestens zwei Daten-Kommunikationsschnittstellen Daten an die Steuereinheit, wobei dies in entgegengesetzte Richtungen der Ring-Topologie erfolgt. Dabei sendet der Busteilnehmer die Daten in Reaktion auf zuvor von der Steuereinheit empfangene und entsprechend adressierte Daten oder Befehle die Daten an die Steuereinheit.

Gemäß einem Aspekt der vorliegenden Erfindung ist vorgesehen, dass die Steuereinheit des Bussystems zur automatischen Initialisierung zunächst die jeweiligen an dem Bussystem angeschlossenen Busteilnehmer identifiziert und anschließend den identifizierten Busteilnehmern eine spezifische Adresse, insbesondere Bus-ID, zuweist.

Ein wesentlicher mit der erfindungsgemäßen Lösung erzielbarer Vorteil ist insbesondere darin zu sehen, dass von dem System automatisch eine Störung, insbesondere eine Unterbrechung, in einer Zweipunktverbindung (Bussegment) der Ring-Topologie erkannt werden kann. Dies erfolgt beispielsweise dann, wenn ein Busteilnehmer über das Bussystem Daten an die Steuereinheit sendet und diese Daten nur an einer der mindestens zwei Daten-Kommunikationsschnittstellen der Steuereinheit empfangen werden.

Alternativ oder zusätzlich hierzu kann das System auf eine Störung eines Busteilnehmers rückschließen, wenn die Steuereinheit über nur eine der mindestens zwei Daten-Kommunikationsschnittstellen an einen Busteilnehmer Daten mit Rückmelde-/Antwort-Aufforderung sendet und die Steuereinheit von dem angesprochenen Busteilnehmer trotz der Rückmelde-/Antwort-Aufforderung keine Daten über mindestens eine ihrer mindestens zwei Daten-Kommunikationsschnittstellen empfängt.

Eine Initialisierung des Bussystems ist beispielsweise bei der Erst-Inbetriebnahme des Systems oder bei einem Austausch oder einer Ergänzung der an dem Bussystem angeschlossenen Peripheriegeräte durchzuführen. Diese Initialisierung erfolgt vorzugsweise automatisch, und zwar indem die Steuereinheit über eine ihrer mindestens zwei Daten-Kommunikationsschnittstellen Konfigurations-Daten an den ersten Bussteilnehmer schickt. Bei den Konfigurations-Daten kann es sich beispielsweise um ein entsprechendes Datenpaket handeln. Durch den Empfang der Konfigurations-Daten wird dem ersten Busteilnehmer eine eindeutige Adresse (Bus-ID) zugewiesen.

Nach der Zuweisung einer eindeutigen Adresse an den ersten Busteilnehmer sendet die Steuereinheit einen zweiten Konfigurations-Datensatz, und zwar ebenfalls über die eine ihrer mindestens zwei Daten-Kommunikationsschnittstellen. Dieser zweite Konfigurations-Datensatz wird vom ersten Busteilnehmer nicht beachtet, da der Konfigurations-Datensatz nicht an ihn adressiert ist. Stattdessen leitet der erste Busteilnehmer (unter Beibehaltung der Senderichtung) den Konfigurations-Datensatz direkt an den nächsten Busteilnehmer weiter. Mit anderen Worten, wenn der Busteilnehmer auf einem seiner beiden Ports einen nicht an ihn adressierten Konfigurations-Datensatz leitet er diesen über seinen anderen Port an den nächsten Busteilnehmer weiter. Auf diese Art und Weise wird sequenziell jedem Busteilnehmer eine Bus-ID zugewiesen.

Die Steuereinheit erkennt das Ende des Initialisierungsprozesses dadurch, dass von der Steuereinheit gesendete Daten an der anderen Daten-Kommunikationsschnittstelle (Port) der Steuereinheit wieder empfangen werden. Dies ist dann der Fall, wenn jedem Busteilnehmer eine eindeutige Bus-ID zugeordnet wurde.

Gemäß einem Aspekt der Erfindung kann die Steuereinheit einzelne Busteilnehmer direkt ansprechen. Dazu verwendet sie die Bus-ID des jeweiligen Busteilnehmers. Dabei ist es vorgesehen, dass ein Busteilnehmer auf einen Befehl bzw. eine Rückmelde-/Antwort-Aufforderung der Steuereinheit eine entsprechende Antwort auf beiden ihrer Ports (Daten-Kommunikationsschnittstelle) sendet. Dies bedeutet, dass die Steuereinheit die Antwort des Busteilnehmers auf ihren beiden Ports empfängt.

Eine an einen bestimmten Busteilnehmer adressierte Rückmelde-/Antwort-Aufforderung wird von dem entsprechenden Busteilnehmer immer über seine beiden Ports beantwortet. Nach der Initialisierung werden alle Daten von dem Busteilnehmer unmittelbar und unter Beibehaltung der Senderichtung an den nächsten Busteilnehmer weitergeleitet. Dies geschieht ohne Verzögerung, insbesondere ohne vorherige Prüfung der Adresse.

Insbesondere kann die Kommunikation zwischen Steuereinheit und Busteilnehmer eine auf dem Master-Slave Prinzip basierende Kommunikation sein. In diesem Fall dient die Steuereinheit als Master-Einheit und die einzelnen Busteilnehmer als Slave-Einheiten. Die Busteilnehmer werden dann nur Daten senden, wenn sie einen entsprechenden busteilnehmeradressierten Befehl von der Steuereinheit erhalten. Daraufhin sendet der entsprechende Busteilnehmer eine Antwort an die Steuereinheit.

Alternativ ist es denkbar, dass die Busteilnehmer und die Steuereinheit gemäß einer Peer-to-Peer Kommunikation miteinander kommunizieren. In diesem Fall können die Busteilnehmer Daten an die Steuereinheit senden, ohne dass dafür eine entsprechende busteilnehmeradressierte Aufforderung der Steuereinheit vorliegen muss. Eine Peer-to-Peer Kommunikation ist beispielsweise dann von Vorteil, wenn ein oder mehrere Busteilnehmer als manuell bedienbare Brandmelder ausgeführt sind. Bei manueller Betätigung eines solchen Busteilnehmers kann dieser als selbstständige Reaktion im Rahmen einer Peer-to-Peer Kommunikation entsprechende Daten an die Steuereinheit senden.

Um ein redundantes System zu schaffen und die möglichen Fehlerquellen weiter zu minimieren, ist gemäß einem weiteren Aspekt der Erfindung eine Zusatz-Steuereinheit vorgesehen, die zu der Steuereinheit parallel geschaltet ist. Bei Ausfall der (Haupt-)Steuereinheit übernimmt die Zusatz-Steuereinheit die bisherige Aufgabe der ausgefallenden Steuereinheit.

Nachfolgend werden Ausführungsbeispiele der Erfindung unter Bezugnahme auf die Zeichnungen näher beschrieben.

Es zeigen:
- Fig. 1: eine schematische Darstellung zur Erläuterung eines Initialisierung-Prozesses bei einem Ausführungsbeispiel des erfindungsgemäßen Bussystems;
- Fig. 2: eine schematische Darstellung zur Erläuterung der Funktionsweise eines intakten Bussystems gemäß der Erfindung nach dessen Initialisierung;
- Fig. 3: eine schematische Darstellung zur Erläuterung der Detektion eines Leitungsfehlers durch die Steuereinheit in einem Bussystem gemäß der vorliegenden Erfindung;
- Fig. 4: eine schematische Darstellung zur Erläuterung der Vorgehensweise nach der Detektion einer Störung bzw. eines Leitungsfehlers in dem Bussystem gemäß Fig. 3;
- Fig. 5: ein schematisches Blockschaltbild eines exemplarischen Busteilnehmers, der an die Busleitung des Bussystems angekoppelt ist;
- Fig. 6: ein schematisches Blockschaltbild des exemplarischen Busteilnehmers gemäß Fig. 5 in einem Zustand, in welchem der Busteilnehmer Daten über die erste Daten-Kommunikationsschnittstelle des Buskopplers empfängt;
- Fig. 7: ein schematisches Blockschaltbild des exemplarischen Busteilnehmers gemäß Fig. 5 in einem Zustand, in welchem der Busteilnehmer Daten über die zweite Daten-Kommunikationsschnittstelle des Buskopplers empfängt;
- Fig. 8: ein schematisches Blockschaltbild des exemplarischen Busteilnehmers gemäß Fig. 5 in einem Zustand, in welchem der Busteilnehmer über die erste Daten-Kommunikationsschnittstelle des Buskopplers Daten sendet;
- Fig. 9: ein schematisches Blockschaltbild des exemplarischen Busteilnehmers gemäß Fig. 5 in einem Zustand, in welchem der Busteilnehmer über die zweite Daten-Kommunikationsschnittstelle des Buskopplers Daten sendet;
- Fig. 10: ein schematisches Blockschaltbild des exemplarischen Busteilnehmers gemäß Fig. 5 in einem Zustand, in welchem der Busteilnehmer über die beide Daten-Kommunikationsschnittstellen des Buskopplers Daten sendet;
- Fig. 11: ein schematisches Blockschaltbild des exemplarischen Busteilnehmers gemäß Fig. 5 in einem Zustand, in welchem der Ring in der Sende-/Empfangsumschalteinheit des Buskopplers geschlossen ist und auf der zweiten Daten-Kommunikationsschnittstelle des Buskopplers empfangene Daten zu der ersten Daten-Kommunikationsschnittstelle des Buskopplers weitergeleitet werden; und
- Fig. 12: ein schematisches Blockschaltbild des exemplarischen Busteilnehmers gemäß Fig. 5 in einem Zustand, in welchem der Ring in der Sende-/Empfangsumschalteinheit des Buskopplers geschlossen ist und auf der ersten Daten-Kommunikationsschnittstelle des Buskopplers empfangene Daten zu der zweiten Daten-Kommunikationsschnittstelle des Buskopplers weitergeleitet werden.

Die in den Zeichnungen schematisch dargestellten exemplarischen Ausführungsformen des erfindungsgemäßen Bussystems 1 eignen sich insbesondere zur Überwachung und/oder Steuerung von Komponenten einer Brandmelde-, Brandbekämpfungs- und/oder Sauerstoffreduzierungsanlage. Diese Komponenten sind jeweils als Busteilnehmer 3.1, 3.2, 3.3 in dem Bussystem 1 integriert und können mit einer als Loop Controller ausgeführten und zu dem Bussystem 1 gehörenden Steuereinheit 2 kommunizieren.

Jeder Busteilnehmer 3.1, 3.2, 3.3 weist einen Buskoppler 11 auf, über den der entsprechende Busteilnehmer 3.1, 3.2, 3.3 mit der Busleitung des Bussystems 1 angekoppelt ist. Jeder Buskoppler 11 weist mindestens zwei (in den dargestellten Ausführungsbeispielen genau zwei) Daten-Kommunikationsschnittstellen 3.11, 3.12; 3.21, 3.22; 3.31, 3.32 auf, die jeweils zum Senden und Empfangen von Daten ausgelegt sind. Auch die als Loop Controller ausgebildete Steuereinheit 2 ist mit zwei Daten-Kommunikationsschnittstellen 2.1, 2.2 versehen, die ebenfalls jeweils zum Senden und Empfangen von Daten ausgelegt sind.

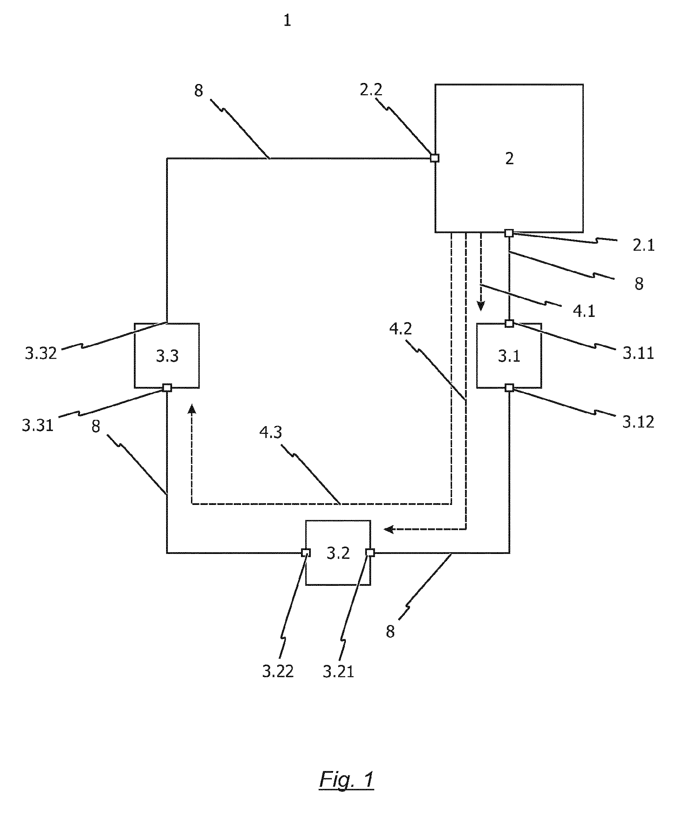

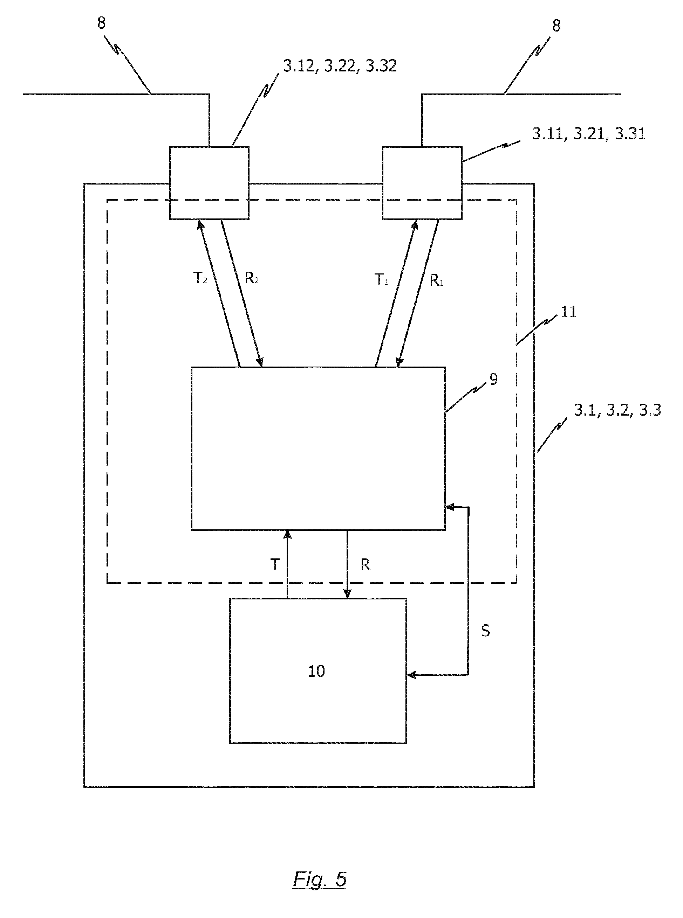

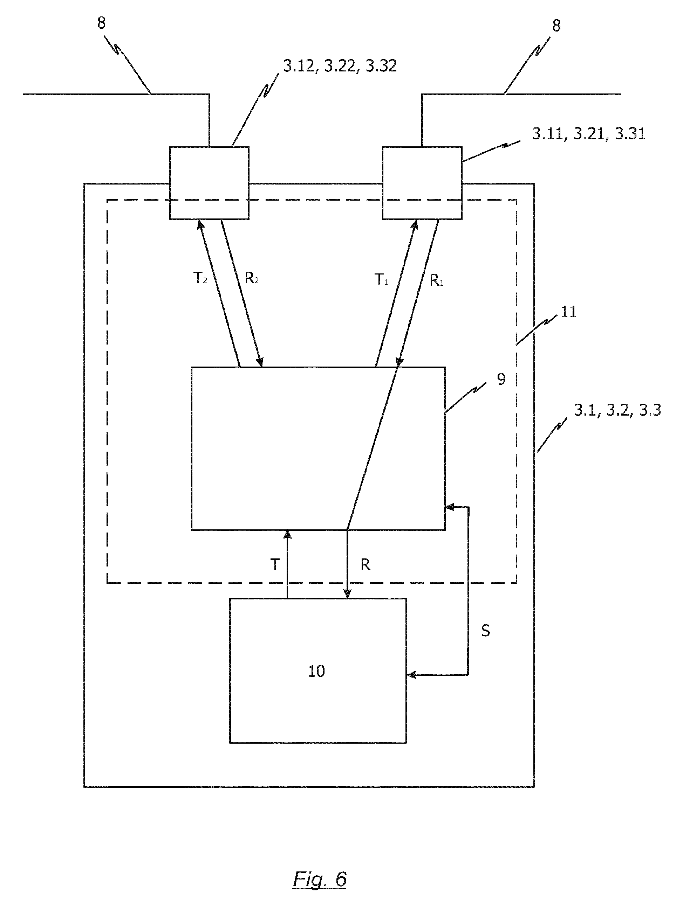

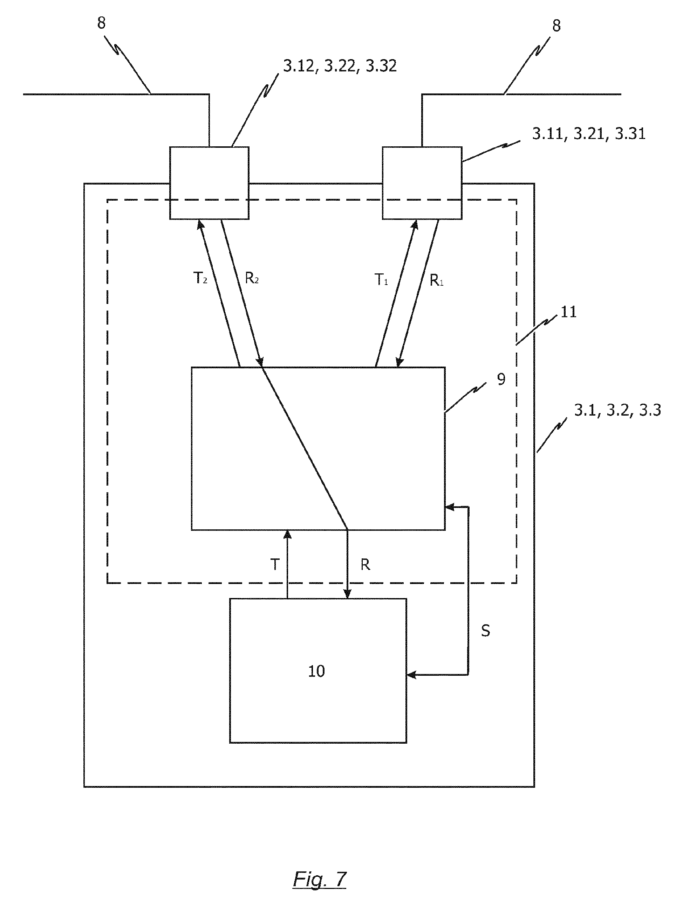

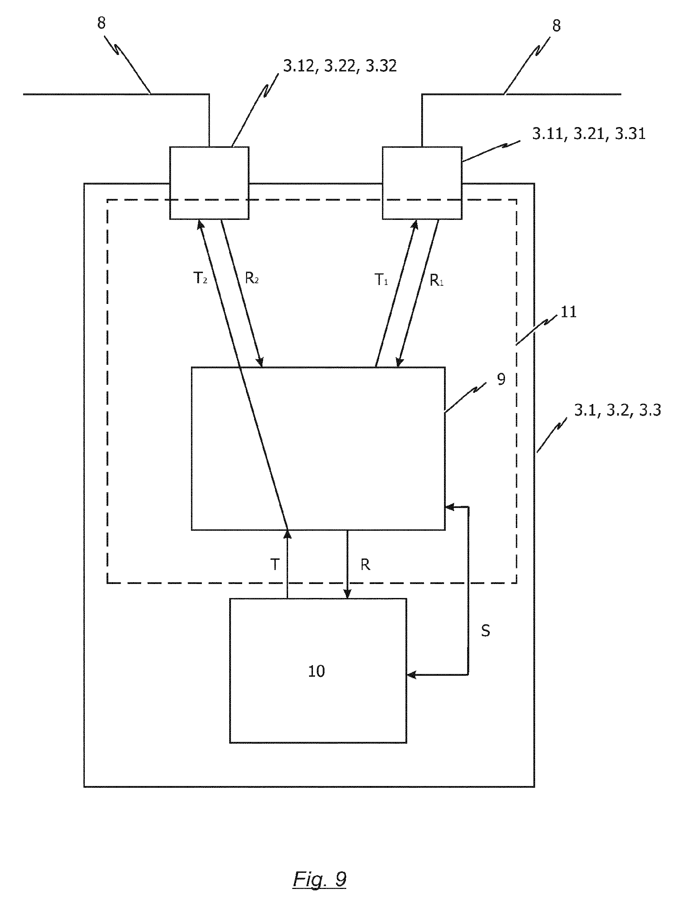

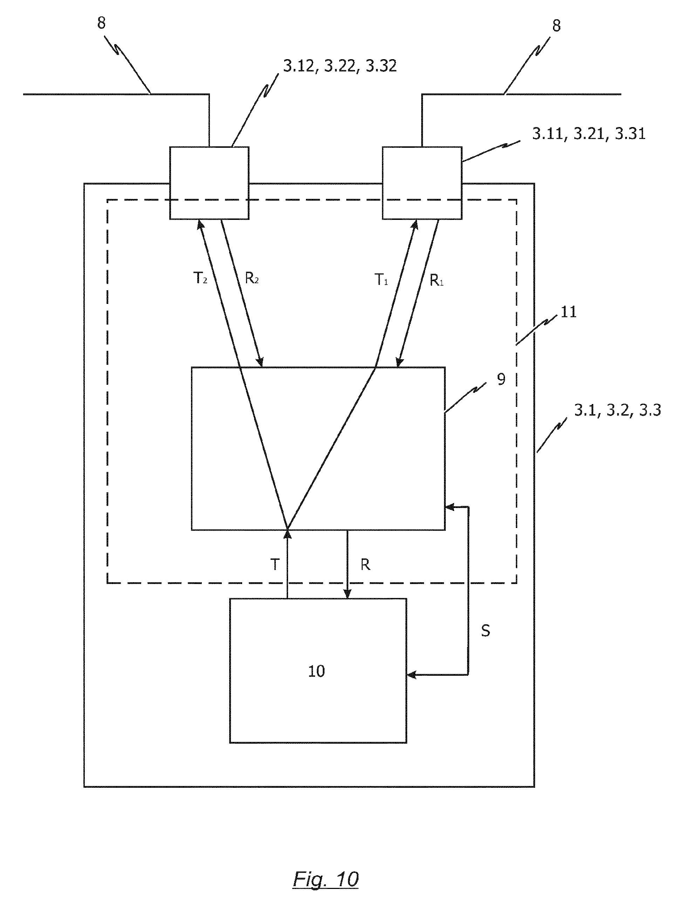

Hierbei ist darauf hinzuweisen, dass in den Darstellungen gemäß den Figuren 1 bis 4 nur die Daten-Kommunikationsschnittstellen 3.11, 3.12; 3.21, 3.22; 3.31, 3.32 der Buskoppler 11 gezeigt sind. Ein schematisches Blockschaltbild eines exemplarischen Busteilnehmers 3.1, 3.2, 3.3 mit Buskoppler 11, über den der Busteilnehmer 3.1, 3.2, 3.3 an die Busleitung des Bussystems 1 angekoppelt ist, ist in Fig. 5 gezeigt. Die Funktionsweise des Buskopplers 11 wird anhand der Darstellungen in den Figuren 6 bis 12 ersichtlich.

Die einzelnen Komponenten des Bussystems 1, d.h. die Steuereinheit 2 und die jeweiligen Busteilnehmer 3.1, 3.2, 3.3, sind über einzelne Bussegmente miteinander verbunden, wobei jedes Bussegment eine Zweipunktverbindung 8 zwischen zwei benachbarten Komponenten (Steuereinheit und Busteilnehmer) des Bussystems 1 bildet. Auf diese Weise wird eine Ring-Topologie ausgebildet, so dass es sich bei dem Bussystem 1 um ein Ring-Bussystem handelt.

Die die Zweipunktverbindungen 8 ausbildenden Bussegmente können zumindest bereichsweise als drahtgebundene und/oder optische Datenübertragungskanäle, insbesondere Glasfaserverbindungen mit Lichtwellenleiter, ausgebildet sein.

Bei dem erfindungsgemäßen Bussystem 1 ist vorgesehen, dass jeder Busteilnehmer 3.1, 3.2, 3.3 des Bussystems 1 die von der Steuereinheit 2 auf einer der beiden Daten-Kommunikationsschnittstellen 3.11, 3.12; 3.21, 3.22; 3.31, 3.32 empfangenen Daten ohne Verzögerung über seine andere Daten-Kommunikationsschnittstelle 3.11, 3.12; 3.21, 3.22; 3.31, 3.32 sendet. So werden die von der Steuereinheit zu übertragenden Daten von Busteilnehmer zu Busteilnehmer weitergeleitet. Wie es nachfolgend noch näher beschrieben wird, erfolgt diese Weiterleitung ohne vorherige Prüfung der Adresse, um jegliche Verzögerung zu vermeiden.

Bei dem erfindungsgemäßen Bussystem 1 ist vorgesehen, dass jeder Busteilnehmer 3.1, 3.2, 3.3 des Bussystems 1 dann, wenn er Daten an die Steuereinheit 2 senden soll/will, die inhaltsgleiche Information (Daten) sowohl über seine erste als auch über seine zweite Kommunikationsschnittstelle 3.11, 3.12; 3.21, 3.22; 3.31, 3.32 sendet, so dass die Daten über zwei unterschiedliche, im Hinblick auf die Ring-Topologie gegenläufige Datenübertragungskanäle zu der Steuereinheit 2 übertragen werden.

Wenn die in dem Bussystem 1 realisierte Datenübertragung auf dem Master-Slave-Prinzip basiert, sendet der betreffende Busteilnehmer 3.1, 3.2, 3.3 die Daten in Reaktion auf einer zuvor von der Steuereinheit 2 empfangenen Aufforderung. Denkbar ist aber auch eine auf dem Peer-to-Peer-Prinzip basierende Datenübertragung - in solch einem Fall kann die Datenübertragung von dem Busteilnehmer 3.1, 3.2, 3.3 zu der Steuereinheit 2 auch ohne eine entsprechende Aufforderung seitens der Steuereinheit 2 erfolgen.

Erfindungsgemäß sendet die Steuereinheit 2 im "normalen" Busbetrieb, d.h. vor dem Erkennen einer Störung in einer Zweipunktverbindung 8 der Ring-Topologie, grundsätzlich alle Daten an den bzw. die Busteilnehmer 3.1, 3.2, 3.3 nur über eine ihrer zwei Daten-Kommunikationsschnittstellen 2.1, 2.2.

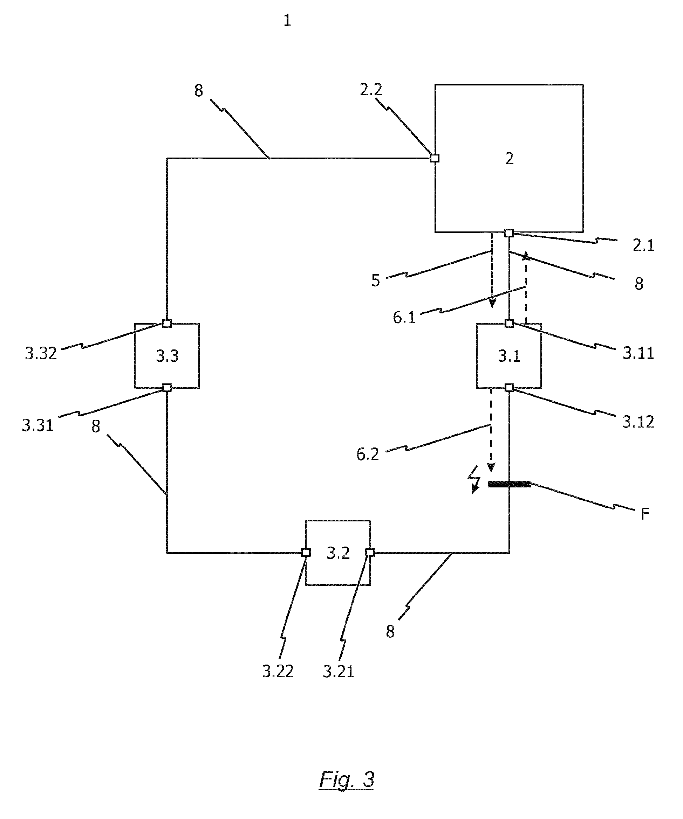

Wenn hingegen eine Störung in einer Zweipunktverbindung 8 der Ring-Topologie erkannt wurde, ändert die Steuereinheit 2 ihren Übertragungsmodus und sendet dann die inhaltsgleiche Information (Daten) über ihre beiden Daten-Kommunikationsschnittstellen 2.1, 2.2 zu dem betreffenden Busteilnehmer 3.1, 3.2, 3.3 bzw. den betreffenden Busteilnehmern 3.1, 3.2, 3.3. Dann werden die inhaltsgleichen Daten über zwei getrennte Datenübertragungskanäle mit im Hinblick auf die Ring-Topologie entgegengesetzte Senderichtungen gesendet. Wie das System eine Störung in einer Zweipunktverbindung 8 der Ring-Topologie automatisch erkennen kann, wird nachfolgend unter Bezugnahme auf die schematische Darstellung in Fig. 3 näher beschrieben.

In Fig. 1 ist in einer schematischen Weise eine erste exemplarische Ausführungsform des erfindungsgemäßen Bussystems 1 dargestellt. Bei dem Bussystem 1 gemäß Fig. 1 sind schematisch drei Busteilnehmer 3.1, 3.2, 3.3 dargestellt. Es sei jedoch angemerkt dass die Anzahl der Busteilnehmer beliebig sein kann, insbesondere können auch deutlich mehr als nur drei Busteilnehmer in dem Bussystem 1 integriert sein. Auch würde sich das erfindungsgemäße Bussystem 1 - zumindest dem Prinzip nach - mit nur einem einzigen Busteilnehmer eignen.

Abhängig von der jeweiligen Anwendung kann aber auch eine drahtgebundene Datenübertragung von Vorteil sein. In solch einem Fall wären als Bussegmente drahtgebundene Zweipunktverbindungen 8 vorzusehen. Insbesondere kann es sich hierbei um zwei- oder vieradrige Kabel handeln, welche vorzugsweise entsprechend gegen elektromagnetische Störungen abgeschirmt sind. Hier bietet sich beispielsweise an, für die Bussegmente jeweils ein Twisted-Pair-Kabel zu verwenden oder ähnliche Kabeltypen, bei denen die Adern paarweise miteinander verdrillt sind. Hierbei wird die Erkenntnis ausgenutzt, dass Adernpaare mit unterschiedlich starker Verdrillung (Schlaglänge) und unterschiedlichem Drehsinn in einem Kabel verseilt werden können, wobei verdrillte Adernpaare besseren Schutz gegenüber äußeren magnetischen Wechselfeldern und elektrostatische Beeinflussungen bieten im Vergleich zu Adern, die nur parallel geführt sind.

Bevor das Bussystem 1 in Betrieb genommen werden kann, muss dieses zunächst initialisiert werden. Dies ist bei der Erst-Inbetriebnahme des Systems erforderlich, aber auch bei einer Neu-Inbetriebnahme, etwa dann, wenn sich die Konfiguration der in dem Bussystem 1 integrierten Busteilnehmen geändert hat, wie beispielsweise nachdem weitere Busteilnehmer zu dem Bussystem hinzugefügt haben.

Bevor das Bussystem 1 beispielsweise bei einem Neustart des Systems oder bei Erst-Inbetriebnahme initialisiert wird, befinden sich alle Busteilnehmer 3.1, 3.2, 3.3 in einem neutralen Zustand, der hierin auch als "Idle-Zustand" bezeichnet wird. Wie in Fig. 1 mit gestrichelten Pfeilen angedeutet, sendet die Steuereinheit 2 zur Initialisierung des Systems nur über ihre (erste) Daten-Übertragungsschnittstelle 2.1 entsprechend Konfigurations-Daten 4.1 an den in der Ring-Topologie unmittelbar an der Steuereinheit 2 angrenzenden "ersten" Busteilnehmer 3.1, um diesem eine entsprechende Adresse (Bus-ID) zuzuweisen.

Anschließend sendet die Steuereinheit 2 ebenfalls über ihre (erste) Daten-Übertragungsschnittstelle 2.1 weitere Konfigurations-Daten 4.2. Da dem ersten Busteilnehmer 3.1 bereits eine eindeutige Adresse zugeordnet wurde und die weiteren Konfigurations-Daten 4.2 nicht an die dem ersten Busteilnehmer 3.1 zugeordnete Adresse gerichtet sind, ignoriert der erste Busteilnehmer 3.1 diese weiteren Konfigurations-Daten 4.2. "Ignorieren" bedeutet in diesem Zusammenhang, dass der erste Busteilnehmer 3.1 erkennt, dass die weiteren Konfigurations-Daten 4.2 nicht an ihn gerichtet sind. Von daher werden diese weiteren Konfigurations-Daten 4.2 direkt an den nächsten Busteilnehmer 3.2 weitergeleitet, und zwar unter Beibehaltung der Senderichtung in der Ring-Topologie (in Fig. 1 im Uhrzeigersinn). Da sich dieser Busteilnehmer 3.2 bislang noch in seinem Idle-Zustand befindet, wird dem zweiten Busteilnehmer 3.2 mit den weitergeleiteten Konfigurations-Daten 4.2 ebenfalls eine eindeutige Adresse zugeordnet.

Dieser Initialisierungs-Prozess wird solange fortgesetzt, bis jedem Busteilnehmer 3.1, 3.2, 3.3 eine eindeutige Adresse zugewiesen ist.

Dass der Initialisierungs-Prozess abgeschlossen ist, wird erkannt, sobald ein von der Steuereinheit 2 über deren erste Daten-Kommunikationsschnittstelle 2.1 gesendeter Konfigurations-Datensatz wieder von der der Steuereinheit 2 empfangen wird, und zwar über deren zweite Daten-Kommunikationsschnittstelle 2.2.

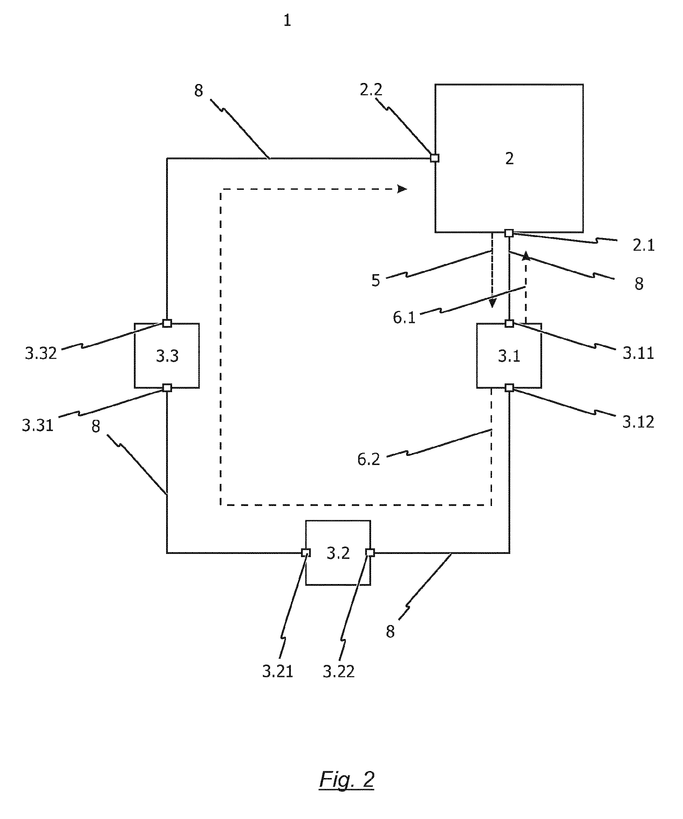

In Fig. 2 ist in einer schematischen Darstellung das Bussystem 1 gemäß Fig. 1 nach dessen Initialisierung gezeigt. Demgemäß kann die Steuereinheit 2 nunmehr einzelne Busteilnehmer, wie beispielsweise den "ernsten" Busteilnehmer 3.1, direkt ansprechen, insbesondere durch einen busteilnehmeradressierten Befehl 5. Gleichwohl kann die Steuereinheit 2 entsprechende Antworten von einzelnen Busteilnehmern empfangen.

Ein exemplarischer Datenübertragungsvorgang ist in Fig. 2 mit Hilfe der dort verwendeten gestrichelten Pfeile dargestellt. Im Einzelnen sendet bei dem in Fig. 2 schematisch dargestellten Zustand die Steuereinheit 2 einen Befehl 5 an den ersten Busteilnehmer 3.1. Dieser Befehl 5 wird an einem Port 3.11 des entsprechenden Busteilnehmers 3.1 empfangen. Daraufhin sendet der Busteilnehmer 3.1 eine entsprechende Antwort zurück zu der Steuereinheit 2.

Im Einzelnen erfolgt dies, indem inhaltsgleiche Informationen (Daten) jeweils über die beiden Daten-Übertragungsschnittstelle 3.11, 3.12 des Busteilnehmers 3.1 an die Steuereinheit 2 zurückgesendet werden, und zwar in - im Hinblick auf die Ring-Topologie - gegenläufige Übertragungsrichtungen. Dies ist in Fig. 2 schematisch mit den gestrichelten Pfeilen 6.1, 6.2 angedeutet.

Die über die Übertragungswege 6.1 und 6.2 versendeten Antworten (Daten) treffen somit an den beiden Ports 2.1 und 2.2 der Steuereinheit 2 ein, da sie in gegensätzlichen Richtungen das Bussystem durchlaufen. Somit kann die Steuereinheit 2 erkennen, dass das Bussystem 2 korrekt funktioniert, da von der Steuereinheit 2 festgestellt wird, dass die Daten 6.1, 6.2 des Busteilnehmers 3.1 auf beiden ihrer Ports 2.1 und 2.2 angekommen sind.

In Fig. 3 ist exemplarisch eine Situation gezeigt, in welcher ein Leitungsfehler F in einem Bussegment 8 des Bussystems 1 aufgetreten ist. Nachfolgend wird unter Bezugnahme auf die schematische Darstellung in Fig. 3 aufgezeigt, wie das erfindungsgemäße Bussystem 1 eine Störung in der Datenübertragung in einem Bussegment 8 des Bussystems 1 erkennt.

Wie in Fig. 3 angedeutet, erreicht ein erster Datensatz 5 der Steuereinheit 2 den ersten Busteilnehmer 3.1 ungestört, da in der in Fig. 3 exemplarisch dargestellten Situation der Leitungsfehler F - im Hinblick auf die von der Steuereinheit gewählte Übertragungsrichtung in der Ring-Topologie - stromabwärts des ersten Busteilnehmers 3.1 vorliegt. Der Busteilnehmer 3.1 sendet dementsprechend Antworten 6.1 und 6.2 zurück an die Steuereinheit 2. Durch den Leitungsfehler F kann die Nachricht 6.2 die Steuereinheit 2 nicht erreichen. Lediglich die Antwort 6.1 des Busteilnehmers 3.1 erreicht die Steuereinheit 2 am Port 2.1. Da die Steuereinheit 2 nicht die Antworten des Busteilnehmers 3.1 auf beiden Ports 2.1, 2.1 empfängt, wird in diesem Fall auf das Vorliegen eines Leitungsfehlers rückgeschlossen.

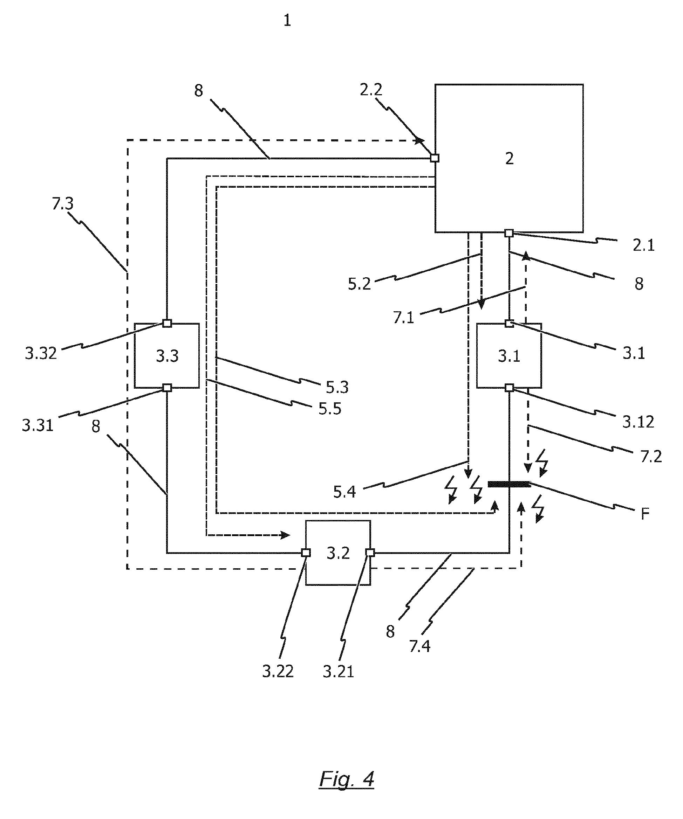

In Fig. 4 ist schematisch die Vorgehensweise nach der Detektion einer Störung bzw. eines Leitungsfehlers F in dem Bussystem 1 gemäß Fig. 3 dargestellt. Unmittelbar nach der Detektion eines Leitungsfehlers F werden von der Steuereinheit 2 sämtliche Daten an die Busteilnehmer 3.1, 3.2, 3.3 über beide Ports 2.1, 2.2 der Steuereinheit 2 versendet. Beispielhaft ist in Fig. 4 dargestellt, wie von der Steuereinheit 2 verschiedene Busteilnehmer 3.1, 3.2 von der Steuereinheit 2 Befehle zugesendet bekommen, welche sich auf verschiedenen Seiten des Leitungsfehlers F befinden.

Im dem Fall, dass sich ein Busteilnehmer, beispielswiese der erste Busteilnehmer 3.1, auf der im Uhrzeigersinn der Ring-Topologie stromaufwärtigen Seite des Leitungsfehlers F befindet, erreicht der mit der Bezugsziffer "5.2" bezeichnete Befehl den Busteilnehmer 3.1, der mit der Bezugsziffer "5.3" bezeichnete Befehl erreicht hingegen nicht den ersten Busteilnehmer 3.1, da er durch den Leitungsfehler F blockiert wird. Der erste Busteilnehmer 3.1 sendet dennoch seine Antworten 7.1 und 7.2 über seine beiden Ports 3.11 und 3.12. In diesem Fall erreicht somit nur eine Antwort (Antwort 7.1) die Steuereinheit 2, und zwar an deren am Port 2.1. Die Übertragung der anderen Antwort 7.2 ist durch den Leitungsfehler F blockiert.

In dem Fall des zweiten Busteilnehmers 3.2, der auf der im Uhrzeigersinn der Ring-Topologie stromabwärtigen Seite des Leitungsfehlers F liegt, erreicht ein in Fig. 4 mit der Bezugsziffer "5.5" bezeichneter Datensatz/Befehl der Steuereinheit 2 über den zweiten Port 2.2 der Steuereinheit 2 den zweiten Busteilnehmer 3.2. Der mit der Bezugsziffer "5.5" bezeichnete Datensatz/Befehl der Steuereinheit 2, der von der Steuereinheit 2 über ihre ersten Port 2.1 versendet wurde, erreicht aufgrund des Leitungsfehlers F den zweiten Busteilnehmer 3.2 nicht. Der zweite Busteilnehmer 3.2 sendet dann über seine beiden Ports 3.21 und 3.22 wiederum Befehle 7.3 und 7.4 an die Steuereinheit 2. In diesem Fall gelangt der mit der Bezugsziffer "5.5" bezeichnete Datensatz/Befehl über den zweiten Port 2.2 die Steuereinheit und der mit der Bezugsziffer "5.5" bezeichnete Datensatz/Befehl erreicht die Steuereinheit 2 aufgrund des Leitungsfehlers F nicht.

Dieses Schema lässt sich leicht für beliebig viele Busteilnehmer verallgemeinern, und es ist unmittelbar ersichtlich, dass mit einem Bussystem 1 bzw. mit dem Verfahren zum Betreiben des Bussystems 1 alle Busteilnehmer von der Steuereinheit 2 erreicht werden können, selbst wenn ein Leitungsfehler F vorliegt. Außerdem ist es dazu nicht notwendig, dass einzelne oder alle Busteilnehmer neu gestartet bzw. neu initialisiert werden müssen. Die Verzögerung, die nach dem Auftreten eines Leitungsfehlers F auftritt, beschränkt sich somit auf den Zeitraum der Detektion des Leitungsfehlers F. Sofort nach der Detektion des Leitungsfehlers F werden Befehle von der Steuereinheit 2 auf beiden Ports 2.1 und 2.2 der Steuereinheit 2 gesendet und somit können alle Busteilnehmer erreichen.

Dadurch, dass die Busteilenehmer wiederum Antworten auf Befehle der Steuereinheit 2 auf beiden ihrer Ports senden, kann somit sichergestellt werden, dass zu jedem Zeitpunkt bei einem Leitungsfehler F alle Befehle der Steuereinheit 2 von allen Busteilnehmern empfangen werden können und alle Antworten der Busteilnehmer von der Steuereinheit 2 empfangen werden können.

Nachfolgend werden unter Bezugnahme auf die Darstellungen in den Figuren 5 bis 12 der Aufbau und die Funktionsweise eines Buskopplers 11 beschrieben, welcher in einer exemplarischen Ausführungsform des erfindungsgemäßen Bussystems 1 zum Einsatz kommt, um einen Busteilnehmer 3.1, 3.2, 3.3 an die Busleitung des Bussystems 1 anzukoppeln.

Gemäß dem in Fig. 5 gezeigten, schematischen Blockschaltbild weist die exemplarische Ausführungsform des Buskopplers 11 eine Sende-/Empfangsumschalteinheit 9 auf. Des Weiteren gehören zu dem Buskoppler 11 die mindestens zwei Daten-Kommunikationsschnittstellen 3.11, 3.12; 3.21, 3.22; 3.31, 3.32 des entsprechenden Busteilnehmers 3.1, 3.2, 3.3. Wie bereits genannt, weist bei den in den Zeichnungen dargestellten Ausführungsbeispielen jeder Busteilnehmer 3.1, 3.2, 3.3 genau zwei Daten-Kommunikationsschnittstellen 3.11, 3.12; 3.21, 3.22; 3.31, 3.32 auf, so dass im Folgenden von der ersten und zweiten Daten-Kommunikationsschnittstelle des Buskopplers 11 gesprochen wird.

Wie in Fig. 5 mit den entsprechenden Pfeilen T1, T2, R1 und R2 angedeutet, steht die Sende-/Empfangsumschalteinheit 9 des Buskopplers mit den beiden zum Buskoppler 11 gehörenden Daten-Kommunikationsschnittstellen 3.11, 3.12; 3.21, 3.22; 3.31, 3.32 in bidirektionaler Kommunikation. Im Einzelnen ist vorgesehen, dass über die Sendeleitung T1 Daten von der Sende-/Empfangsumschalteinheit 9 zu der ersten Daten-Kommunikationsschnittstelle 3.11, 3.21, 3.31 gesendet werden können, während über die Sendeleitung T2 Daten von der Sende-/Empfangsumschalteinheit 9 zu der zweiten Daten-Kommunikationsschnittstelle 3.12, 3.22, 3.32 gesendet werden können. Die Empfangsleitungen R1 und R2 dienen dazu, dass Daten, die über die erste bzw. zweite Datenkommunikationsschnittstelle 3.11, 3.12; 3.21, 3.22; 3.31, 3.32 des Buskopplers empfangen werden, zu der Sende-/Empfangsumschalteinheit 9 gelangen.

Hierbei ist zu berücksichtigen, dass es sich bei der Darstellung in Fig. 5 nur um eine schematische Darstellung handelt. Insbesondere sollen die dort gezeigten Pfeile T1, T2, R1 und R2 hauptsächlich nur den Datenfluss und die Datenflussrichtung anzeigen. Es ist insbesondere somit denkbar, dass die Sendeleitung T1 und die Empfangsleitung R1 bzw. die Sendeleitung T2 und die Empfangsleitung R2 physisch identisch sind.

Der Buskoppler 11 weist ferner eine Schnittstelle T, R, S auf, über die die Sende-/Empfangsumschalteinheit 9 mit einem Mikrokontroller 10 des Busteilnehmers 3.1, 3.2, 3.3 verbunden ist. Der Mikrokontroller 10, der gelegentlich auch als "Applikationscontroller" bezeichnet wird, stellt die Funktionalität des als Busteilnehmer 3.1, 3.2, 3.3 ausgeführten Peripheriegerätes dar. Der Applikationscontroller hat u.a. die Aufgabe, Sensordaten einzulesen und/oder Aktoren anzusteuern. In den in den Zeichnungen dargestellten exemplarischen Ausführungsformen ist der Mikrokontroller 10 nicht Bestandteil des Buskopplers 11.

Gemäß einer bevorzugten Realisierung der in Fig. 5 schematisch angedeuteten Busankopplung weist die Daten-Kommunikationsschnittstelle zwischen der Sende-/Empfangsumschalteinheit 9 und dem Mikrokontroller 10 zum einen eine bidirektionale serielle Datenverbindung auf, über die der Datenstrom des Ringbusses von der Sende-/Empfangsumschalteinheit 9 an den Mikrokontroller 10 weitergereicht wird, und mehreren Steuerleitungen S, über die das Verhalten der Sende-/Empfangsumschalteinheit 9 im Buskoppler 11 gesteuert wird. In Fig. 5 ist die Daten-Kommunikation zwischen der Sende-/Empfangsumschalteinheit 9 und dem Mikrokontroller 10 schematisch mit den Pfeilen "R" und "T" angedeutet. Hierbei soll der Pfeil "R" einen - von dem Peripheriegerät aus gesehen - empfangenen Datenstrom (Empfangsleitung) und der der Pfeil "T" einen - von dem Peripheriegerät aus gesehen - an das Bussystem 1 abgehenden Datenstrom (Sendeleitung) symbolisieren.

Je nach Ansteuerung durch den Applikationscontroller (Mikrokontroller 10) leitet der Buskoppler die Daten auf dem Ringbus entweder durch, indem die Daten direkt zwischen den beiden Daten-Kommunikationsschnitten 3.11, 3.12; 3.21, 3.22; 3.31, 3.32 des Buskopplers ausgetauscht werden, oder er sperrt die Durchleitung. Werden Daten durch den Buskoppler durchgeleitet, spricht man davon, das der Ring geschlossen ist. Andernfalls ist der Ring offen. In jedem Fall werden jedoch an einem der beiden Daten-Kommunikationsschnittstellen 3.11, 3.12; 3.21, 3.22; 3.31, 3.32 des Buskopplers anliegende Daten an die Daten-Kommunikationsschnittstelle zwischen der der Sende-/Empfangsumschalteinheit 9 und dem Mikrokontroller 10 ausgegeben.

Zusätzlich können Daten von der Daten-Kommunikationsschnittstelle zwischen der der Sende-/Empfangsumschalteinheit 9 und dem Mikrokontroller 10 an die erste und/oder zweite Daten-Kommunikationsschnitte 3.11, 3.12; 3.21, 3.22; 3.31, 3.32 des Buskopplers gesendet werden.

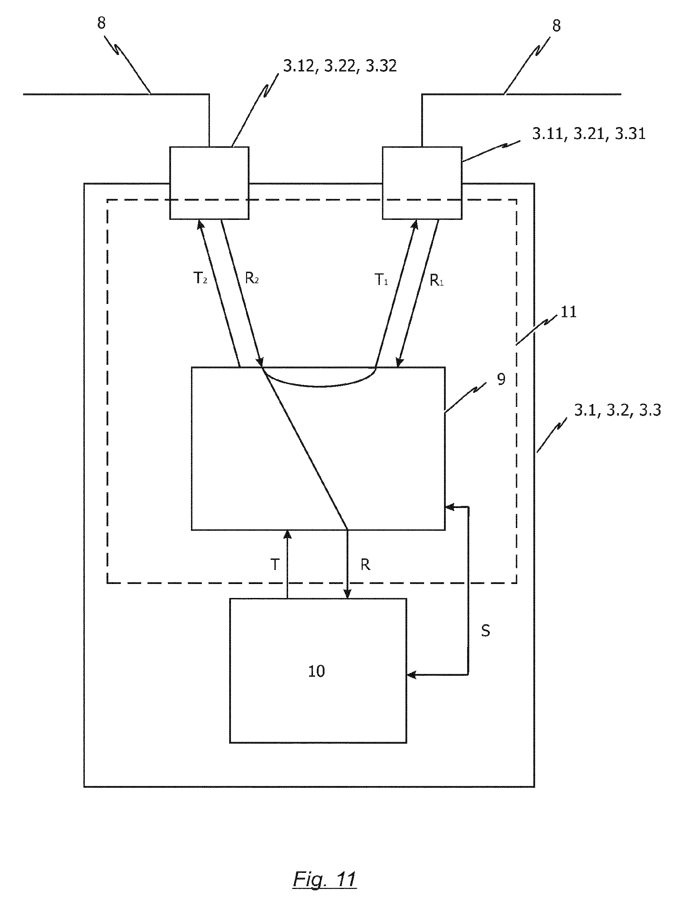

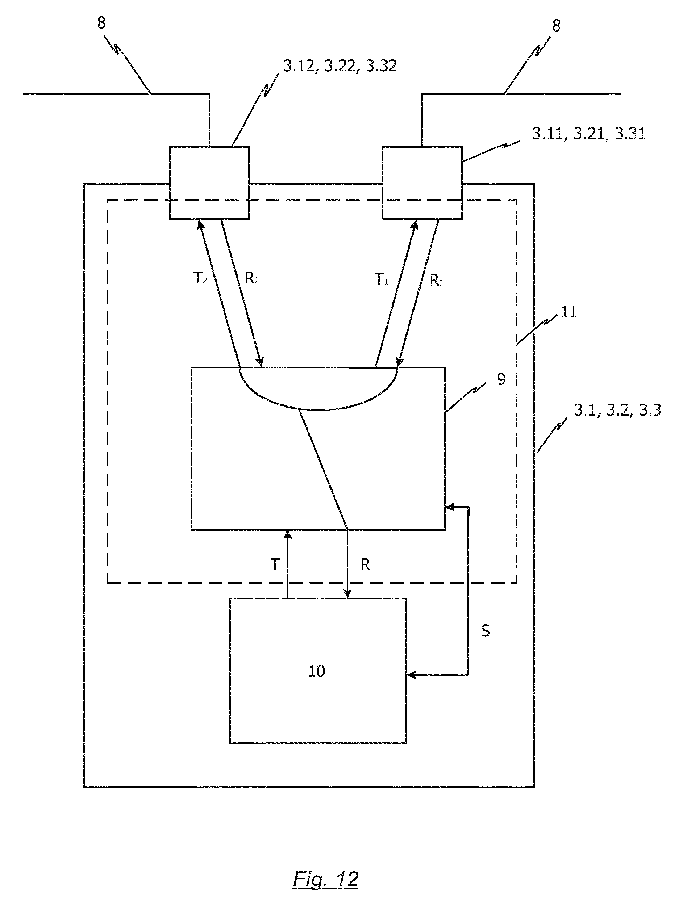

Wie es im Folgenden unter Bezugnahme auf die Darstellungen in den Figuren 6 bis 12 näher beschrieben wird, ist die Sende-/Empfangsumschalteinheit 9 des in Fig. 5 schematisch dargestellten Buskopplers 11 ausgelegt, den Beginn eines Datenempfangs auf mindestens einer der beiden Daten-Kommunikationsschnittstellen 3.11, 3.12; 3.21, 3.22; 3.31, 3.32 des Buskopplers zu erkennen und beim Erkennen des Beginns eines Datenempfangs auf einer der beiden Daten-Kommunikationsschnittstellen 3.11, 3.12; 3.21, 3.22; 3.31, 3.32 automatisch die Empfangsleitung R1, R2 der entsprechenden Daten-Kommunikationsschnittstelle 3.11, 3.12; 3.21, 3.22; 3.31, 3.32 mit einer Sendeleitung T1, T2 der anderen Daten-Kommunikationsschnittstelle 3.11, 3.12; 3.21, 3.22; 3.31, 3.32 zu verbinden (vgl. Fig. 11 und Fig. 12). Auf diese Weise können Daten ohne Verzögerung durch den Buskoppler 11 durchgeleitet werden.

Ferner ist die Sende-/Empfangsumschalteinheit 9 des in Fig. 5 schematisch dargestellten Buskopplers 11 ausgelegt, beim Erkennen des Beginns eines Datenempfangs auf einer der beiden Daten-Kommunikationsschnittstellen 3.11, 3.12; 3.21, 3.22; 3.31, 3.32 des Buskopplers automatisch die Empfangsleitung R1, R2 dieser Daten-Kommunikationsschnittstelle 3.11, 3.12; 3.21, 3.22; 3.31, 3.32 mit der Empfangsleitung R des Mikrokontrollers 10 zu verbinden (vgl. Fig. 6, Fig. 7, Fig. 11 und Fig. 12).

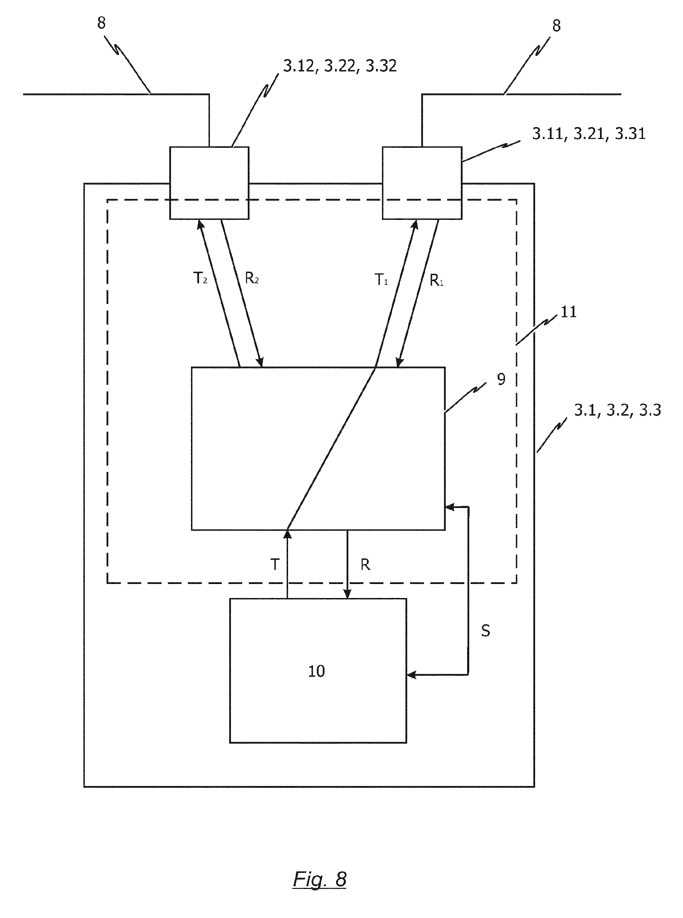

Darüber hinaus ist bei dem in Fig. 5 schematisch dargestellten Ausführungsbeispiel der Mikrokontroller 10 des mindestens einen Busteilnehmers 3.1, 3.2, 3.3 ausgebildet, die Sende-/Empfangsumschalteinheit 9 des Buskopplers so anzusteuern, dass die Sendeleitung T des Mikrokontrollers 10 mit der Sendeleitung T1 der ersten und/oder zweiten Daten-Kommunikationsschnittstelle 3.11, 3.21, 3.31; 3.12, 3.22, 3.32 des Buskopplers verbunden wird (vgl. Fig. 8, Fig. 9 und Fig. 10).

Schließlich ist die Sende-/Empfangsumschalteinheit 9 des in Fig. 5 schematisch dargestellten Buskopplers ausgelegt, das Ende eines Datenempfangs auf mindestens einer der beiden Daten-Kommunikationsschnittstellen 3.11, 3.12; 3.21, 3.22; 3.31, 3.32 des Buskopplers automatisch zu erkennen und beim Erkennen des Endes des Datenempfangs die Verbindung der Empfangsleitung R1, R2 der entsprechenden Daten-Kommunikationsschnittstelle 3.11, 3.12; 3.21, 3.22; 3.31, 3.32 mit der Sendeleitung T1, T2 der entsprechend anderen Daten-Kommunikationsschnittstelle 3.11, 3.12; 3.21, 3.22; 3.31, 3.32 aufzutrennen.

Bei einer exemplarischen Ausführungsform des erfindungsgemäßen Bussystems 1 basiert dieses auf dem RS-485-Standard und die über das Bussystem zu übertragenen Daten werden differentiell übertragen. Nach dem Empfang der Daten durch beispielsweise einen Busteilnehmer (RS485 Transceiver) liegen die Daten als GND bezogener serieller Datenstrom vor.

Bei dieser exemplarischen Realisierung bestehen die Daten grundsätzlich aus einem Start-Bit, acht Daten-Bits, einem Parity-Bit und einem Stopp-Bit; insgesamt also 11Bit. Die Zeitdauer für ein Bit hängt von der Baudrate ab. Je höher die Baudrate, desto geringer die Zeitdauer für ein Bit und je niedriger die Baudrate, desto länger die Bitzeit. Für eine Baudrate von beispielsweise 115200 Baud ergibt sich eine Bitzeit von 8.68 µs. Für die Übertragung von 11 Bit werden demnach etwa 100 µs (95,48 µs) benötigt.

Die im Folgenden beschriebenen Logikpegel beziehen sich alle auf den seriellen GND bezogenen Datenstrom am Ausgang der RS485 Transceiver. Vorzugsweise beginnt das Startbit immer mit einer fallenden Flanke, ist also immer ein Low-Pegel und das Stoppbit ist immer ein High-Pegel. Alles dazwischen ist nicht vorhersagbar.
Zu einer Nachricht gehören üblicherweise mehrere Bytes. Eine Nachricht besteht also immer aus Vielfachen von 11Bit. Vorzugsweise werden die Bytes einer Nachricht als Datenframe "dicht hintereinander gesendet. Der zeitliche Abstand der Bytes zueinander (innerhalb einer Nachricht) sollte dabei eine Zeit von 1,5 Bytezeiten nicht überschreiten. Bei 115200 Baud dürfen zwei Bytes einer Nachricht also nicht später als 150 µs hintereinander gesendet werden.

Zwischen zwei verschiedenen Nachrichten sollte vorzugsweise eine Zeit von mindestens 3,5 Bytezeiten liegen. Bei 115200 Baud sollte also mindestens eine Zeit von etwa 350 µs vergehen, bis eine neue Nachricht auf dem Bus gesendet werden darf.

Für eine Nachricht lässt sich gemäß dem zuvor dargelegten Ausführungsbeispiel also allgemein sagen, dass eine Nachricht immer mit der fallenden Flanke des ersten Startbits beginnt, und dass eine Nachricht immer dann endet, wenn mindestens 150 µs lang kein weiteres Byte gesendet wird (bei 115200 Baud). Auf diese Weise ist das automatische Erkennen des Beginns und des Endes einer Nachricht möglich.

Die Schaltung des Ringbuskopplers reagiert somit auf fallende Flanken an der ersten und zweiten Daten-Kommunikationsschnittstelle des Buskopplers. Wird an einer Daten-Kommunikationsschnittstelle des Buskopplers eine fallende Flanke gefunden, so wird diese Daten-Kommunikationsschnittstelle als Empfangs-Port für die Übertragung von Daten freigeschaltet und an der anderen Daten-Kommunikationsschnittstelle des Buskopplers wird die Erkennung von fallenden Flanken gesperrt.

Wenn das Bussystem noch nicht initialisiert ist, ist der Ring offen, so dass die Daten von dem Empfangs-Port des Buskopplers 11 nur an die Daten-Kommunikationsschnittstelle zwischen der Sende-/Empfangsumschalteinheit 9 und dem Mikrokontroller 10 übertragen werden. Wenn die Initialisierung des Bussystems abgeschlossen ist, ist der Ring geschlossen, so dass die Daten von dem Empfangs-Port des Buskopplers 11 sowohl an die Daten-Kommunikationsschnittstelle zwischen der Sende-/Empfangsumschalteinheit 9 und dem Mikrokontroller 10 als auch an die andere Daten-Kommunikationsschnittstelle des Buskopplers 11 übertragen werden, die verschieden von der als Empfangs-Port dienenden Daten-Kommunikationsschnittstelle ist.

Vorzugsweise bleibt der einmal eingestellte Empfangs-Port bestehen, und zwar unabhängig wie viele Bytes, in welchem zeitlichen Abstand etc. empfangen werden. Hierbei ist es bevorzugt, wenn der Buskoppler die Funktion des Erkennens eines Endes der Nachricht oder eines Richtungswechsels des Datentransfers übernimmt. Hierzu weist der Buskoppler 11 eine entsprechende Steuerlogik auf, vorzugsweise als anwendungsspezifische integrierte Schaltung oder programmierbarer Logikbaustein (PLA, FPGA, CPLD etc.) ggf. in Kombination mit einem Mikrokontroller Wenn von dem Buskoppler 11 erkannt wird, dass seit mindestens 150 µs kein Byte mehr empfangen wurde, trennt dieser die zuvor eingestellte Verbindung auf. Die nächste fallende Flanke an der ersten oder zweiten Daten-Kommunikationsschnittstelle des Buskopplers kann dann eine neue Verbindung herstellen.

Die Erfindung ist nicht auf die in den Zeichnungen dargestellten exemplarischen Ausführungsformen beschränkt, sondern ergibt sich aus einer Zusammenschau sämtlicher hierin offenbarter Merkmale.

## Patentansprüche

1. Bussystem (1) zur Überwachung und/oder Steuerung von Komponenten einer Brandmelde- und/oder Brandbekämpfungsanlage, wobei das Bussystem (1) folgendes aufweist:
- eine Steuereinheit (2) mit mindestens zwei Daten-Kommunikationsschnittstellen (2.1, 2.2), die jeweils zum Senden und Empfangen von Daten ausgelegt sind; und
- mindestens ein Busteilnehmer (3.1, 3.2, 3.3) in Gestalt einer Komponente einer Brandmelde-, Brandbekämpfungs- und/oder Sauerstoffreduzierungsanlage, wobei der Busteilnehmer (3.1, 3.2, 3.3) einen Buskoppler (11) mit mindestens zwei Daten-Kommunikationsschnittstellen (3.11, 3.12; 3.21, 3.22; 3.31, 3.32) aufweist, die jeweils zum Senden und Empfangen von Daten ausgelegt sind,
wobei die Steuereinheit (2) und der mindestens eine Busteilnehmer (3.1, 3.2, 3.3) jeweils über ihre Daten-Kommunikationsschnittstellen (2.1, 2.2; 3.11, 3.12; 3.21, 3.22; 3.31, 3.32) und entsprechende Zweipunktverbindungen (8) unter Ausbildung einer Ring-Topologie miteinander verbunden sind, und
wobei der Buskoppler (11) des mindestens einen Busteilnehmers (3.1, 3.2, 3.3) ausgebildet ist, Daten, die auf einer seiner mindestens zwei Daten-Kommunikationsschnittstellen (3.11, 3.12; 3.21, 3.22; 3.31, 3.32) empfangen werden, direkt über eine andere seiner mindestens zwei Daten-Kommunikationsschnittstellen (3.11, 3.12; 3.21, 3.22; 3.31, 3.32) zu senden und somit weiterzuleiten, wobei die Steuereinheit (2) ausgebildet ist, vor Detektion einer Störung über nur eine der mindestens zwei Daten-Kommunikationsschnittstellen (2.1, 2.2) Daten an den mindestens einen Busteilnehmer (3.1, 3.2, 3.3) zu senden,
wobei der mindestens eine Busteilnehmer (3.1, 3.2, 3.3) derart ausgebildet ist, dass er in Reaktion auf zuvor von der Steuereinheit (2) empfangene busteilnehmeradressierte Daten - über seine mindestens zwei Daten-Kommunikationsschnittstellen (3.11, 3.12; 3.21, 3.22; 3.31, 3.32) in entgegengesetzte Richtungen der Ring-Topologie - Daten an die Steuereinheit (2) sendet, und
wobei die Steuereinheit (2) ausgebildet ist, nach dem Erkennen einer Störung in einer Zweipunktverbindung (8) der Ring-Topologie über ihre mindestens zwei Daten-Kommunikationsschnittstellen (2.1, 2.2) und in entgegengesetzte Senderichtungen alle Daten an den mindestens einen Busteilnehmer (3.1, 3.2, 3.3) zu senden.

2. Bussystem (1) nach Anspruch 1,
wobei der Buskoppler (11) des mindestens einen Busteilnehmers (3.1, 3.2, 3.3) eine Sende-/Empfangsumschalteinheit (9) aufweist, die ausgelegt ist, den Beginn eines Datenempfangs auf mindestens einer der mindestens zwei Daten-Kommunikationsschnittstellen (3.11, 3.12; 3.21, 3.22; 3.31, 3.32) des Buskopplers (11) zu erkennen und beim Erkennen des Beginns eines Datenempfangs auf einer der mindestens zwei Daten-Kommunikationsschnittstellen (3.11, 3.12; 3.21, 3.22; 3.31, 3.32) des Buskopplers (11) eine Empfangsleitung (R1, R2) der entsprechenden Daten-Kommunikationsschnittstelle (3.11, 3.12; 3.21, 3.22; 3.31, 3.32) mit einer Sendeleitung (T1, T2) der anderen Daten-Kommunikationsschnittstelle (3.11, 3.12; 3.21, 3.22; 3.31, 3.32) zu verbinden.

3. Bussystem (1) nach Anspruch 2,
wobei die Sende-/Empfangsumschalteinheit (9) des Buskopplers (11) ausgelegt ist, das Ende eines Datenempfangs auf mindestens einer der mindestens zwei Daten-Kommunikationsschnittstellen (2.1, 2.2; 3.11, 3.12; 3.21, 3.22; 3.31, 3.32) zu erkennen und beim Erkennen des Endes des Datenempfangs die Verbindung der Empfangsleitung (R1, R2) der entsprechenden Daten-Kommunikationsschnittstelle (2.1, 2.2; 3.11, 3.12; 3.21, 3.22; 3.31, 3.32) mit der Sendeleitung (T1, T2) der entsprechend anderen Daten-Kommunikationsschnittstelle (2.1, 2.2; 3.11, 3.12; 3.21, 3.22; 3.31, 3.32) aufzutrennen.

4. Bussystem (1) nach Anspruch 2 oder 3,
wobei die Sende-/Empfangsumschalteinheit (9) des Buskopplers (11) einen Logikbaustein und/oder einen Mikrocontroller aufweist; und/oder wobei der mindestens eine Busteilnehmer (3.1, 3.2, 3.3) eine Verarbeitungseinheit (10) außerhalb des Buskopplers (11) aufweist, die durch einen Logikbaustein und/oder einen Mikrokontroller gebildet wird , und wobei die Sende-/Empfangsumschalteinheit (9) des Buskopplers (11) ferner ausgebildet ist, beim Erkennen des Beginns eines Datenempfangs auf einer der mindestens zwei Daten-Kommunikationsschnittstellen (3.11, 3.12; 3.21, 3.22; 3.31, 3.32) des Buskopplers (11) automatisch die Empfangsleitung (R1, R2) dieser Daten-Kommunikationsschnittstelle (3.11, 3.12; 3.21, 3.22; 3.31, 3.32) mit einer Empfangsleitung (R) der Verarbeitungseinheit (10) zu verbinden.

5. Bussystem (1) nach Anspruch 4,
wobei die Verarbeitungseinheit (10) des mindestens einen Busteilnehmers (3.1, 3.2, 3.3) ausgebildet ist, die Sende-/Empfangsumschalteinheit (9) des Buskopplers (11) so anzusteuern, dass die Sendeleitung (T) der Verarbeitungseinheit (10) mit der Sendeleitung (T1, T2) einer ersten und/oder zweiten Daten-Kommunikationsschnittstelle (3.11, 3.21, 3.31; 3.12, 3.22, 3.32) des Buskopplers (11) verbunden wird; und/oder
wobei die Verarbeitungseinheit (10) des mindestens einen Busteilnehmers (3.1, 3.2, 3.3) ausgebildet ist, die Sende-/Empfangsumschalteinheit (9) des Buskopplers (11) so anzusteuern, dass die automatische Verbindung der Empfangsleitung (R1, R2) einer der mindestens zwei Daten-Kommunikationsschnittstellen (3.11, 3.12; 3.21, 3.22; 3.31, 3.32) des Buskopplers (11) mit der Sendeleitung (T1, T2) einer anderen der mindestens zwei Daten-Kommunikationsschnittstellen (3.11, 3.12; 3.21, 3.22; 3.31, 3.32) des Buskopplers (11) unterbunden wird.

6. Bussystem (1) nach einem der Ansprüche 1 bis 5,
wobei der mindestens eine Busteilnehmer (3.1, 3.2, 3.3) als Brandmelder, als Gassensor, insbesondere Sauerstoff- oder Stickstoffkonzentrationssensor, als Einrichtung zum Detektieren einer Brandkenngröße und/oder als ansteuerbarer Aktuator ausgeführt ist; und/oder
wobei die Zweipunktverbindungen (8) zumindest bereichsweise als drahtgebundene und/oder optische Datenübertragungskanäle ausgebildet sind; und/oder
wobei zur Verbesserung der Ausfallsicherheit des Bussystems (1) zusätzlich zu der Steuereinheit (2) mindestens eine Zusatz-Steuereinheit vorgesehen ist, die redundant zu der Steuereinheit (2) ausgebildet ist und bei Ausfall der Steuereinheit (2) die Aufgaben dieser übernimmt; und/oder wobei die Steuereinheit (2) eine Störungserkennung aufweist zum vorzugsweise automatisch Erkennen und/oder Lokalisieren einer Störung, insbesondere Unterbrechung, in einer Zweipunktverbindung (8) der Ring-Topologie.

7. Verfahren zum Betreiben eines Bussystems (1) nach einem der Ansprüche 1 bis 6, zur Überwachung und/oder Steuerung von ansteuerbaren Komponenten einer Brandmelde-, Brandbekämpfungs- und/oder Sauerstoffreduzierungsanlage, wobei das Verfahren die folgenden Verfahrensschritte aufweist:
- die Steuereinheit (2) sendet über nur eine der mindestens zwei Daten-Kommunikationsschnittstellen (2.1, 2.2) Daten, busteilnehmeradressierte Daten oder Befehle, an den mindestens einen Busteilnehmer (3.1, 3.2, 3.3); und
- der mindestens eine Busteilnehmer (3.1, 3.2, 3.3) sendet über seine mindestens zwei Daten-Kommunikationsschnittstellen (3.11, 3.12; 3.21, 3.22; 3.31, 3.32) und in entgegengesetzte Richtungen der Ring-Topologie Daten an die Steuereinheit (2), in Reaktion auf zuvor von der Steuereinheit (2) empfangene busteilnehmeradressierte Daten oder Befehle.

8. Verfahren nach Anspruch 7,
wobei das Verfahren ferner den folgenden Verfahrensschritt aufweist:
- Initialisieren des Bussystems (1), indem vorzugsweise von der Steuereinheit (2) automatisch dem mindestens einen Busteilnehmer (3.1, 3.2, 3.3) eine Adresse zugewiesen wird.

9. Verfahren nach Anspruch 8,
wobei eine Vielzahl von Busteilnehmern (3.1, 3.2, 3.3) vorgesehen ist, und wobei bei dem Verfahrensschritt des Initialisierens des Bussystems (1) von der Steuereinheit (2) sequentiell Konfigurationsdaten an die einzelnen Busteilnehmer (3.1, 3.2, 3.3) gesendet werden zum Zuweisen von busteilnehmerspezifischen Adressen an die einzelnen Busteilnehmer (3.1, 3.2, 3.3), wobei nach der Adressenzuweisung des Busteilnehmers (3.1, 3.2, 3.3) von der Steuereinheit (2) über das Bussystem (1) gesendete Daten, die nicht an den Busteilnehmer (3.1, 3.2, 3.3) adressiert sind, ohne Verzögerung und unter Beibehaltung der Senderichtung an den nächsten Busteilnehmer (3.1, 3.2, 3.3) weiterleitet.

10. Verfahren nach einem der Ansprüche 7 bis 9,
wobei die Steuereinheit (2) vorzugsweise automatisch eine Störung, insbesondere Unterbrechung, in einer Zweipunktverbindung (8) der Ring-Topologie erkennt, wenn nur an einer der mindestens zwei Daten-Kommunikationsschnittstellen (2.1, 2.2) der Steuereinheit (2) von dem mindestens einen Busteilnehmer (3.1, 3.2, 3.3) über das Bussystem (1) an die Steuereinheit (2) gesendeten Daten empfangen werden; und/oder wobei die Steuereinheit (2) vorzugsweise automatisch eine Störung, insbesondere Unterbrechung, in einer Zweipunktverbindung (8) der Ring-Topologie erkennt, wenn die Steuereinheit (2) über nur eine der mindestens zwei Daten-Kommunikationsschnittstellen (2.1, 2.2) Daten an den mindestens einen Busteilnehmer (3.1, 3.2, 3.3) mit Rückmelde-/Antwort-Aufforderung sendet und die Steuereinheit (2) von dem mindestens einen Busteilnehmer (3.1, 3.2, 3.3) trotz der Rückmelde-/Antwort-Aufforderung keine Daten über mindestens eine ihrer mindestens zwei Daten-Kommunikationsschnittstellen (2.1, 2.2) empfängt.

11. Verfahren nach Anspruch 10,
wobei die Steuereinheit (2) zumindest nach dem Erkennen einer Störung in einer Zweipunktverbindung (8) der Ring-Topologie über ihre mindestens zwei Daten-Kommunikationsschnittstellen (2.1, 2.2) und in entgegengesetzte Senderichtungen alle Daten an den mindestens einen Busteilnehmer (3.1, 3.2, 3.3) sendet, so dass sichergestellt ist, dass trotz des Vorliegens einer Störung in einer Zweipunktverbindung (8) der Ring-Topologie der mindestens eine Busteilnehmer (3.1, 3.2, 3.3) grundsätzlich alle von der Steuereinheit (2) an den mindestens einen Busteilnehmer (3.1, 3.2, 3.3) gesendeten Daten empfängt und die Steuereinheit (2) grundsätzlich alle von dem mindestens einen Busteilnehmer (3.1, 3.2, 3.3) an die Steuereinheit (2) gesendeten Daten empfängt.

12. Verfahren nach einem der Ansprüche 7 bis 11,
wobei die Steuereinheit (2) vor dem Erkennen einer Störung in einer Zweipunktverbindung (8) der Ring-Topologie alle Daten an den mindestens einen Busteilnehmer (3.1, 3.2, 3.3) über nur eine ihrer mindestens zwei Daten-Kommunikationsschnittstellen (2.1, 2.2) sendet, und wobei die Steuereinheit (2) nach dem Erkennen einer Störung in einer Zweipunktverbindung (8) der Ring-Topologie über ihre mindestens zwei Daten-Kommunikationsschnittstellen (2.1, 2.2) und in entgegengesetzte Senderichtungen alle Daten an den mindestens einen Busteilnehmer (3.1, 3.2, 3.3) sendet.

13. Verfahren nach Anspruch 12,
wobei die Steuereinheit (2) nach dem Erkennen einer Störung in einer Zweipunktverbindung (8) der Ring-Topologie vorzugsweise automatisch diejenige Zweipunktverbindung (8) der Ring-Topologie lokalisiert, in welcher die Störung vorliegt, wobei die Steuereinheit (2) hierzu an alle Busteilnehmer (3.1, 3.2, 3.3) Daten mit Rückmelde-/Antwort-Aufforderung sendet und auswertet, über welche ihrer mindestens zwei Daten-Kommunikationsschnittstellen (2.1, 2.2) und von welchem Busteilnehmer (3.1, 3.2, 3.3) Rückmelde-/Antwort-Daten empfangen werden.

14. Verfahren nach einem der Ansprüche 7 bis 13,
wobei die Steuereinheit (2) eine Störung insbesondere einen Ausfall des mindestens eines Busteilnehmers (3.1, 3.2, 3.3) vorzugsweise automatisch erkennt, wenn die Steuereinheit (2) trotz einer Rückmelde-/Antwort-Aufforderung über keine ihrer mindestens zwei Daten-Kommunikationsschnittstellen (2.1, 2.2) entsprechende Rückmelde-/Antwort-Daten von dem Busteilnehmer (3.1, 3.2, 3.3) empfängt.

## Claims

1. A bus system (1) for monitoring and/or controlling components of a fire alarm and/or firefighting system, wherein the bus system (1) comprises the following:
- a control unit (2) having at least two data communication interfaces (2.1, 2.2) respectively designed to transmit and receive data; and
- at least one bus node (3.1, 3.2, 3.3) in the form of a component of a fire alarm, firefighting and/or oxygen-reducing system, wherein the bus node (3.1, 3.2, 3.3) comprises a bus coupler (11) having at least two data communication interfaces (3.11, 3.12; 3.21, 3.22; 3.31, 3.32) respectively designed to transmit and receive data,
wherein the control unit (2) and the at least one bus node (3.1, 3.2, 3.3) are respectively connected together via their data communication interfaces (2.1, 2.2; 3.11, 3.12; 3.21, 3.22; 3.31, 3.32) and corresponding two-point connections (8) to form a ring topology, and
wherein the bus coupler (11) of the at least one bus node (3.1, 3.2, 3.3) is designed to directly transmit, and thus forward, data received at one of its at least two communication interfaces (3.11, 3.12; 3.21, 3.22; 3.31, 3.32) via another of its at least two data communication interfaces (3.11, 3.12; 3.21, 3.22; 3.31, 3.32), wherein the control unit (2) is designed to transmit data to the at least one bus node (3.1, 3.2, 3.3) over only one of the at least two data communication interfaces (2.1, 2.2) prior to a malfunction being detected,
wherein the at least one bus node (3.1, 3.2, 3.3) is designed so as to transmit data to the control unit (2) in opposite ring topology directions via its at least two data communication interfaces (3.11, 3.12; 3.21, 3.22; 3.31, 3.32) in response to bus node-addressed data previously received from the control unit (2), and
wherein the control unit (2) is designed to transmit all data to the at least one bus node (3.1, 3.2, 3.3) via its at least two data communication interfaces (2.1, 2.2), and in opposite transmission directions, after a malfunction being detected in a two-point connection (8) of the ring topology.

2. The bus system (1) according to claim 1,
wherein the bus coupler (11) of the at least one bus node (3.1, 3.2, 3.3) comprises a transmit/receive switching unit (9) designed to detect the start of data being received at least at one of the at least two data communication interfaces (3.11, 3.12; 3.21, 3.22; 3.31, 3.32) of the bus coupler (11) and connect a receive line (R1, R2) of the respective data communication interface (3.11, 3.12; 3.21, 3.22; 3.31, 3.32) to a transmit line (T1, T2) of the other data communication interface (3.11, 3.12; 3.21, 3.22; 3.31, 3.32) upon detecting the start of data reception at one of the at least two data communication interfaces (3.11, 3.12; 3.21, 3.22; 3.31, 3.32) of the bus coupler (11).

3. The bus system (1) according to claim 2,
wherein the transmit/receive switching unit (9) of the bus coupler (11) is designed to detect the end of data reception at least at the one of the at least two data communication interfaces (2.1, 2.2; 3.11, 3.12; 3.21, 3.22; 3.31, 3.32) and disconnect the receive line (R1, R2) connection of the respective data communication interface (2.1, 2.2; 3.11, 3.12; 3.21, 3.22; 3.31, 3.32) to the transmit line (T1, T2) of the respective other data communication interface (2.1, 2.2; 3.11, 3.12; 3.21, 3.22; 3.31, 3.32) upon detecting the end of data reception.

4. The bus system (1) according to claim 2 or 3,
wherein the transmit/receive switching unit (9) of the bus coupler (11) comprises a logic module and/or microcontroller; and/or
wherein the at least one bus node (3.1, 3.2, 3.3) comprises a processing unit (10) external of the bus coupler (11) which is formed by a logic module and/or microcontroller,
and wherein the transmit/receive switching unit (9) of the bus coupler (11) is further designed to automatically connect the receive line (R1, R2) of a data communication interface (3.11, 3.12; 3.21, 3.22; 3.31, 3.32) to the receive line (R) of the processing unit (10) upon the start of data reception being detected at said one of the at least two data communication interfaces (3.11, 3.12; 3.21, 3.22; 3.31, 3.32) of the bus coupler (11).

5. The bus system (1) according to claim 4,
wherein the processing unit (10) of the at least one bus node (3.1, 3.2, 3.3) is designed to control the transmit/receive switching unit (9) of the bus coupler (11) such that the transmit line (T) of the processing unit (10) connects to the transmit line (T1, T2) of a first and/or second data communication interface (3.11, 3.21, 3.31; 3.12, 3.22, 3.32) of the bus coupler (11); and/or
wherein the processing unit (10) of the at least one bus node (3.1, 3.2, 3.3) is designed to control the transmit/receive switching unit (9) of the bus coupler (11) so as to inhibit the automatic connection of the receive line (R1, R2) of one of the at least two data communication interfaces (3.11, 3.12; 3.21, 3.22; 3.31, 3.32) of the bus coupler (11) to the transmit line (T1, T2) of another of the at least two data communication interfaces (3.11, 3.12; 3.21, 3.22; 3.31, 3.32) of the bus coupler (11).

6. The bus system (1) according to any one of claims 1 to 5,
wherein the at least one bus node (3.1, 3.2, 3.3) is configured as a fire alarm, a gas sensor, particularly an oxygen or nitrogen concentration sensor, as a device for detecting a fire characteristic and/or as a controllable actuator; and/or
wherein the two-point connections (8) are at least partly designed as wired and/or optical data transmission channels; and/or
wherein to improve the bus system (1) reliability, at least one auxiliary control unit is provided additionally to the control unit (2) which is formed so as to be redundant to said control unit (2) and take over the function of the control unit (2) upon its malfunction; and/or
wherein the control unit (2) comprises failure detection to preferably automatically detect and/or localize a malfunction, particularly a break in a two-point connection (8) of the ring topology.

7. A method for operating a bus system (1) in accordance with any one of claims 1 to 6 for monitoring and/or controlling actuatable components of a fire alarm, firefighting and/or oxygen-reducing system, wherein the method comprises the following method steps:
- the control unit (2) transmits data, bus node-addressed data or commands to the at least one bus node (3.1, 3.2, 3.3) via only one of the at least two data communication interfaces (2.1, 2.2); and
- the at least one bus node (3.1, 3.2, 3.3) transmits data to the control unit (2) in response to the bus node-addressed data or commands previously received from the control unit (2) via its at least two data communication interfaces (3.11, 3.12; 3.21, 3.22; 3.31, 3.32) and in opposite ring topology directions.

8. The method according to claim 7,
wherein the method further comprises the following method step:
- initializing of the bus system (1) by the at least one bus node (3.1, 3.2, 3.3) being preferably automatically assigned an address by the control unit (2).

9. The method according to claim 8,
wherein a plurality of bus nodes (3.1, 3.2, 3.3) are provided, and wherein the control unit (2) transmits sequential configuration data to the individual bus nodes (3.1, 3.2, 3.3) during the method step of initializing the bus system (1) for the purpose of assigning bus node-specific addresses to said individual bus nodes (3.1, 3.2, 3.3), wherein subsequent a bus node (3.1, 3.2, 3.3) being assigned an address, data from the control unit (2) transmitted over the bus system (1) which is not addressed to one bus node (3.1, 3.2, 3.3) is forwarded to the next bus node (3.1, 3.2, 3.3) without delay and while maintaining the transmission direction.

10. The method according to any one of claims 7 to 9,
wherein the control unit (2) preferably automatically detects a malfunction, particularly a break, in a two-point connection (8) of the ring topology when only one of the at least two data communication interfaces (2.1, 2.2) of the control unit (2) receives data sent through the bus system (1) to the control unit (2) from the at least one bus node (3.1, 3.2, 3.3); and/or wherein the control unit (2) preferably automatically detects a malfunction, particularly a break, in a two-point connection (8) of the ring topology when the control unit (2) transmits data along with an acknowledge/response request to the at least one bus node (3.1, 3.2, 3.3) over only one of the at least two data communication interfaces (2.1, 2.2) and the control unit (2) receives no data from the at least one bus node (3.1, 3.2, 3.3) via at least one of its at least two data communication interfaces (2.1, 2.2) despite the acknowledge/response request.

11. The method according to claim 10,
wherein the control unit (2) transmits all data to the at least one bus node (3.1, 3.2, 3.3) via its at least two data communication interfaces (2.1, 2.2), and in opposite transmission directions, at least after a malfunction being detected in a two-point connection (8) of the ring topology, so as to ensure that despite there being a malfunction in a two-point connection (8) of the ring topology, the at least one bus node (3.1, 3.2, 3.3) generally receives all the data transmitted from the control unit (2) to said at least one bus node (3.1, 3.2, 3.3) and the control unit (2) generally receives all the data transmitted from the at least one bus node (3.1, 3.2, 3.3) to said control unit (2).

12. The method according to any one of claims 7 to 11,
wherein the control unit (2) transmits all data to the at least one bus node (3.1, 3.2, 3.3) via only one of its at least two data communication interfaces (2.1, 2.2) prior to a malfunction being detected in a two-point connection (8) of the ring topology, and wherein the control unit (2) transmits all data to the at least one bus node (3.1, 3.2, 3.3) via its at least two data communication interfaces (2.1, 2.2), and in opposite transmission directions, after a malfunction being detected in a two-point connection (8) of the ring topology.

13. The method according to claim 12,
wherein after a malfunction being detected in a two-point connection (8) of the ring topology, the control unit (2) preferably automatically localizes the two-point connection (8) of the ring topology with the malfunction, wherein the control unit (2) hereto transmits data along with an acknowledge/ response request to all the bus nodes (3.1, 3.2, 3.3) and evaluates via which of its at least two data communication interfaces (2.1, 2.2) and from which bus node (3.1, 3.2, 3.3) acknowledge/response data is received.

14. The method according to any one of claims 7 to 13,
wherein the control unit (2) preferably automatically detects a malfunction, particularly a failure of the at least one bus node (3.1, 3.2, 3.3), when the control unit (2) does not receive any respective acknowledge/response data from the bus node (3.1, 3.2, 3.3) via any of its at least two data communication interfaces (2.1, 2.2) despite the acknowledge/response request.

## Revendications

1. Système de bus (1) pour surveiller et/ou commander une installation de détection d'incendie et/ou de lutte contre l'incendie, le système de bus (1) comprenant :
- une unité de commande (2) pourvue d'au moins deux interfaces de communication de données (2.1, 2.2) conçues chacune pour émettre et recevoir des données ; et
- au moins un participant de bus (3.1, 3.2, 3.3) sous la forme d'un composant d'une installation de détection d'incendie, de lutte contre l'incendie et/ou de réduction d'oxygène, le participant de bus (3.1, 3.2, 3.3) présentant un coupleur de bus (11) pourvu d'au moins deux interfaces de communication de données (3.11, 3.12, ; 3.21, 3.22 ; 3.31, 3.32) qui sont conçues chacune pour émettre et recevoir des données, dans lequel
l'unité de commande (2) et ledit au moins un participant de bus (3.1, 3.2, 3.3) sont reliés entre eux en formant une topologie annulaire via leurs interfaces de communication de données (2.1, 2.2; 3.11, 3.12 ; 3.21, 3.22; 3.31, 3.32) et via des connexions correspondantes à deux points (8), et le coupleur de bus (11) dudit au moins un participant de bus (3.1, 3.2, 3.3) est conçu pour émettre et donc acheminer des données, reçues sur l'une de ses au moins deux interfaces de communication de données (3.11, 3.12 ; 3.21, 3.22 ; 3.31, 3.32), directement via l'autre de ses au moins deux interfaces de communication de données (3.11, 3.12 ; 3.21, 3.22 ; 3.31, 3.32), l'unité de commande (2) étant réalisée pour émettre des données audit au moins un participant de bus (3.1, 3.2, 3.3) via une seule desdites au moins deux interfaces de communication de données (2.1, 2.2) avant la détection d'une perturbation,
ledit au moins un participant de bus (3.1, 3.2, 3.3) est réalisé de manière à émettre des données à l'unité de commande (2) via ses au moins deux interfaces de communication de données (3.11, 3.12 ; 3.21, 3.22 ; 3.31, 3.32) dans des directions opposées de la topologie annulaire, en réponse à des données adressées au participant de bus et reçues par l'unité de commande auparavant, et
l'unité de commande (2) est réalisée pour émettre toutes les données audit au moins un participant de bus (3.1, 3.2, 3.3) via ses au moins deux interfaces de communication de données (2.1, 2.2) et dans des directions d'émission opposées, après la reconnaissance d'une perturbation dans une connexion à deux points (8) de la topologie annulaire.

2. Système de bus (1) selon la revendication 1,
dans lequel le coupleur de bus (11) dudit au moins un participant de bus (3.1, 3.2, 3.3) comprend une unité de commutation d'émission/réception (9) qui est conçue pour reconnaître le début d'une réception de données sur l'une au moins desdites au moins deux interfaces de communication de données (3.11, 3.12 ; 3.21, 3.22 ; 3.31, 3.32) du coupleur de bus (11), et pour connecter, lors de la reconnaissance du début d'une réception de données sur l'une desdites au moins deux interfaces de communication de données (3.11, 3.12 ; 3.21, 3.22 ; 3.31, 3.32) du coupleur de bus (11), une ligne de réception (R1, R2) de l'interface de communication de données correspondante (3.11, 3.12 ; 3.21, 3.22 ; 3.31, 3.32) à une ligne d'émission (T1, T2) de l'autre interface de communication de données (3.11, 3.12 ; 3.21, 3.22 ; 3.31, 3.32).

3. Système de bus (1) selon la revendication 2,
dans lequel l'unité de commutation d'émission/réception (9) du coupleur de bus (11) est conçue pour reconnaître la fin d'une réception de données sur l'une au moins desdites au moins deux interfaces de communication de données (2.1, 2.2, 3.11, 3.12 ; 3.21, 3.22 ; 3.31, 3.32), et pour séparer, lors de la reconnaissance de la fin de la réception de données, la liaison de la ligne de réception (R1, R2) de l'interface de communication de données correspondante (2.1, 2.2 ; 3.11, 3.12 ; 3.21, 3.22 ; 3.31, 3.32) à la ligne d'émission (T1, T2) de l'autre interface de communication de données correspondante (2.1, 2.2 ; 3.11, 3.12 ; 3.21, 3.22 ; 3.31, 3.32).

4. Système de bus (1) selon la revendication 2 ou 3,
dans lequel l'unité de commutation d'émission/réception (9) du coupleur de bus (11) comprend un composant logique et/ou un microcontrôleur ; et/ou ledit au moins un participant de bus (3.1, 3.2, 3.3) comprend une unité de traitement (10) à l'extérieur du coupleur de bus (11), qui est formé par un composant logique et/ou par un microcontrôleur,
et l'unité de commutation d'émission/réception (9) du coupleur de bus (11) est en outre réalisée pour connecter, lors de la reconnaissance du début d'une réception de données sur l'une desdites au moins deux interfaces de communication de données (3.11, 3.12 ; 3.21, 3.22 ; 3.31, 3.32) du coupleur de bus (11), automatiquement la ligne de réception (R1, R2) de cette interface de communication de données (3.11, 3.12 ; 3.21, 3.22 ; 3.31, 3.32) à une ligne de réception (R) de l'unité de traitement (10).

5. Système de bus (1) selon la revendication 4,
dans lequel l'unité de traitement (10) dudit au moins un participant de bus (3.1, 3.2, 3.3) est réalisée pour piloter l'unité de commutation d'émission/réception (9) du coupleur de bus (11) de telle sorte que la ligne d'émission (T) de l'unité de traitement (10) est connectée à la ligne d'émission (T1, T2) d'une première et/ou seconde interface de communication de données (3.11, 3.21, 3.31 ; 3.12, 3.22, 3.32) du coupleur de bus (11); et/ou
l'unité de traitement (10) dudit au moins un participant de bus (3.1, 3.2, 3.3) est réalisé pour piloter l'unité de commutation d'émission/réception (9) du coupleur de bus (11) de telle sorte que la connexion automatique de la ligne de réception (R1, R2) de l'une desdites au moins deux interfaces de communication de données (3.11, 3.12 ; 3.21, 3.22 ; 3.31, 3.32) du coupleur de bus (11) à la ligne d'émission (T1, T2) de l'autre desdites au moins deux interfaces de communication de données (3.11, 3.12 ; 3.21, 3.22 ; 3.31, 3.32) du coupleur de bus (11) est interdite.

6. Système de bus (1) selon l'une des revendications 1 à 5,
dans lequel ledit au moins un participant de bus (3.1, 3.2, 3.3) est réalisé sous forme de système de détection d'incendie, de détecteur de gaz, en particulier de détecteur de concentration d'oxygène ou d'azote, de système pour détecter une grandeur caractéristique d'incendie et/ou d'actionneur pilotable ; et/ou
les connexions à deux points (8) sont réalisées au moins localement sous forme de canaux de transmission de données filaires et/ou optiques ; et/ou pour améliorer la sécurité contre une défaillance du système de bus (1), il est prévu au moins une unité de commande supplémentaire en supplément à l'unité de commande (2), qui est réalisée de façon redondante à l'unité de commande (2) et qui, lors d'une défaillance de l'unité de commande (2), reprend les fonctions de celle-ci ; et/ou
l'unité de commande (2) comprend un système de reconnaissance de perturbation pour reconnaître et/ou repérer une perturbation de préférence automatiquement, en particulier une interruption dans une connexion à deux points (8) de la topologie annulaire.

7. Procédé pour faire fonctionner un système de bus (1) selon l'une des revendications 1 à 6, pour surveiller et/ou commander des composants pilotables d'une installation de détection d'incendie, de lutte contre l'incendie et/ou de réduction d'oxygène, le procédé comprenant les étapes suivantes :
- l'unité de commande (2) émet des données, des données adressées à un participant de bus ou des ordres audit au moins un participant de bus (3.1, 3.2, 3.3) via une seule desdites au moins deux interfaces de communication de données (2.1, 2.2) ; et
- ledit au moins un participant de bus (3.1, 3.2, 3.3) émet des données à l'unité de commande (2) via ses au moins deux interfaces de communication de données (3.11, 3.12 ; 3.21, 3.22 ; 3.31, 3.32) dans des directions opposées de la topologie annulaire, en réponse à des données ou à des ordres adressé(e)s au participant de bus et reçu(e)s par l'unité de commande (2) auparavant.

8. Procédé selon la revendication 7,
le procédé comprenant en outre l'étape suivante :
- l'initialisation du système de bus (1) du fait qu'une adresse est attribuée de préférence automatiquement audit au moins un participant de bus (3.1, 3.2, 3.3) par l'unité de commande (2).

9. Procédé selon la revendication 8,
dans lequel est prévue une pluralité de participants de bus (3.1, 3.2, 3.3) et
dans lequel, dans l'étape de l'initialisation du système de bus (1) par l'unité de commande (2), des données de configuration sont émises séquentiellement aux participants de bus individuels (3.1, 3.2, 3.3) pour attribuer des adresses, spécifiques aux participants de bus, aux participants de bus individuels (3.1, 3.2, 3.3), et après l'attribution d'adresse au participant de bus (3.1, 3.2, 3.3) par l'unité de commande (2), des données émises via le système de bus (1) qui ne sont pas adressées au participant de bus (3.1, 3.2, 3.3) sont acheminées sans retard et en conservant la direction d'émission au participant de bus suivant (3.1, 3.2, 3.3).

10. Procédé selon l'une des revendications 7 à 9,
dans lequel l'unité de commande (2) reconnaît de préférence automatiquement une perturbation, en particulier une interruption, dans une connexion à deux points (8) de la topologie annulaire lorsque des données émises par ledit au moins un participant de bus (3.1, 3.2, 3.3) à l'unité de commande via le système de bus (1) ne sont reçues que sur l'une desdites au moins deux interfaces de communication de données (2.1, 2.2) de l'unité de commande (2) ; et/ou
l'unité de commande (2) reconnaît de préférence automatiquement une perturbation, en particulier une interruption, dans une connexion à deux points (8) de la topologie annulaire lorsque l'unité de commande (2) émet avec demande de retour/réponse des données audit au moins un participant de bus (3.1, 3.2, 3.3) via une seule desdites au moins deux interfaces de communication de données (2.1, 2.2), et que l'unité de commande (2) ne reçoit pas de données via l'une au moins des ses au moins deux interfaces de communication de données (2.1, 2.2) par ledit au moins un participant de bus (3.1, 3.2, 3.3) malgré la demande de retour/réponse.

11. Procédé selon la revendication 10,
dans lequel, au moins après avoir reconnu une perturbation dans une connexion à deux points (8) de la topologie annulaire, l'unité de commande (2) émet toutes les données audit au moins un participant de bus (3.1, 3.2, 3.3) via ses au moins deux interfaces de communication de données (2.1, 2.2) et dans des directions d'émission opposées, de manière à assurer que malgré la présence d'une perturbation dans une connexion à deux points (8) de la topologie annulaire, ledit au moins un participant de bus (3.1, 3.2, 3.3) reçoit par principe toutes les données émises par l'unité de commande (2) audit au moins un participant de bus (3.1, 3.2, 3.3) et que l'unité de commande (2) reçoit par principe toutes les données émises par ledit au moins un participant de bus (3.1, 3.2, 3.3) à l'unité de commande (2).

12. Procédé selon l'une des revendications 7 à 11,
dans lequel, avant de reconnaître une perturbation dans une connexion à deux points (8) de la topologie annulaire, l'unité de commande (2) émet toutes les données audit au moins un participant de bus (3.1, 3.2, 3.3) via une seule de ses au moins deux interfaces de communication de données (2.1, 2.2), et dans lequel,
après avoir reconnu une perturbation dans une connexion à deux points (8) de la topologie annulaire, l'unité de commande (2) émet toutes les données audit au moins un participant de bus (3.1, 3.2, 3.3) via ses au moins deux interfaces de communication de données (2.1, 2.2) et dans des directions d'émission opposées.

13. Procédé selon la revendication 12,
dans lequel, après avoir reconnu une perturbation dans une connexion à deux points (8) de la topologie annulaire, l'unité de commande (2) repère de préférence automatiquement cette connexion à deux points (8) de la topologie annulaire dans laquelle se présente la perturbation, et à cet effet l'unité de commande (2) émet des données avec demande de retour/réponse à tous les participants de bus et elle les évalue pour savoir par laquelle de ses au moins deux interfaces de communication de données (2.1, 2.2) et de quel participant de bus (3.1, 3.2, 3.3) des données sont reçues en retour/réponse.

14. Procédé selon l'une des revendications 7 à 13,
dans lequel l'unité de commande reconnaît de préférence automatiquement une perturbation, en particulier une défaillance dudit au moins un participant de bus (3.1, 3.2, 3.3) lorsque l'unité de commande (2) ne reçoit pas de données de retour/réponse correspondantes dudit participant de bus (3.1, 3.2, 3.3) via l'une de ses au moins deux interfaces de communication de données (2.1, 2.2), malgré une demande de retour/réponse.
